# EUROPEAN PATENT APPLICATION

(11) **EP 4 831 902 A1**
(43) Date of publication of application: **28.10.2026**
(21) Application number: 24907150.7
(22) Date of filing: 03.12.2024
(51) Int. Cl.: G06Q 50/04

(54) **INFORMATION PROCESSING METHOD, INFORMATION PROCESSING DEVICE, AND PROGRAM**

(30) Priority: 21.12.2023 US 202363613210 P
(71) Applicant: Panasonic Intellectual Property Management Co., Ltd., Kadoma-shi, Osaka 571-0057 (JP)
(72) Inventor: KURODA, Mizuki, Kadoma-shi, Osaka 571-0057 (JP); NAKASAKA, Ayaka, Kadoma-shi, Osaka 571-0057 (JP); YAMAMOTO, Kakuya, Kadoma-shi, Osaka 571-0057 (JP); UNAGAMI, Yuji, Kadoma-shi, Osaka 571-0057 (JP)
(74) Representative: Appelt, Christian W.
(86) International application number: PCT/JP2024/042758
(87) International publication number: WO 2025/134763

(57) **Abstract**

An information processing method includes: obtaining a request to provide display information including a history of one or more processes executed when manufacturing a product (S30); obtaining history information of each of the one or more processes for the product in response to the request (S40); generating the display information based on the history information obtained for each of the one or more processes (S60); and outputting the display information generated (S70), wherein the one or more processes include a process of manufacturing a second object from a first object for manufacturing the product, and the display information includes information for displaying an image that includes: a plurality of first figures corresponding one-to-one to objects in the one or more processes; and a second figure corresponding to a flow of the objects for manufacturing the second object from the first object via the one or more processes.

## Description

### [Technical Field]

The present disclosure relates to an information processing method, an information processing device, and a program.

### [Background Art]

Life cycle assessment (LCA) software for LCA is known (see, for example, Non Patent Literature (NPL) 1).

### [Citation List]

### [Non Patent Literature]

[NPL 1]
"How our LCA Software Works", [online], searched on October 31, 2024 (Reiwa 6), Internet <URL: https://www.ifu.com/umberto/>

### [Summary of Invention]

### [Technical Problem]

In order to realize circular economy, it is desirable to visualize information related to product manufacturing. For example, it is desirable to visualize more appropriate information for realizing circular economy than the information visualized using the technology disclosed in NPL 1.

The present disclosure accordingly provides an information processing method, etc. capable of assisting in visualizing more appropriate information related to product manufacturing.

### [Solution to Problem]

An information processing method according to an aspect of the present disclosure includes: obtaining a request to provide display information including a history of one or more processes executed when manufacturing a product; obtaining history information of each of the one or more processes for the product in response to the request; generating the display information based on the history information obtained for each of the one or more processes; and outputting the display information generated, wherein the one or more processes include a process of manufacturing a second object from a first object for manufacturing the product, and the display information includes information for displaying an image that includes: a plurality of first figures corresponding one-to-one to objects in the one or more processes; and a second figure corresponding to a flow of the objects for manufacturing the second object from the first object via the one or more processes.

An information processing device according to an aspect of the present disclosure includes: a first obtainer that obtains a request to provide display information including a history of one or more processes executed when manufacturing a product; a second obtainer that obtains history information of each of the one or more processes for the product in response to the request; a generator that generates the display information based on the history information obtained for each of the one or more processes; and an outputter that outputs the display information generated, wherein the one or more processes include a process of manufacturing a second object from a first object for manufacturing the product, and the display information includes information for displaying an image that includes: a plurality of first figures corresponding one-to-one to objects in the one or more processes; and a second figure corresponding to a flow of the objects for manufacturing the second object from the first object via the one or more processes.

A program according to an aspect of the present disclosure is a program for causing a computer to execute the above-described information processing method.

### [Advantageous Effects of Invention]

According to an aspect of the present disclosure, it is possible to provide an information processing method, etc. capable of assisting in visualizing more appropriate information related to product manufacturing.

### [Brief Description of Drawings]

[FIG. 1]

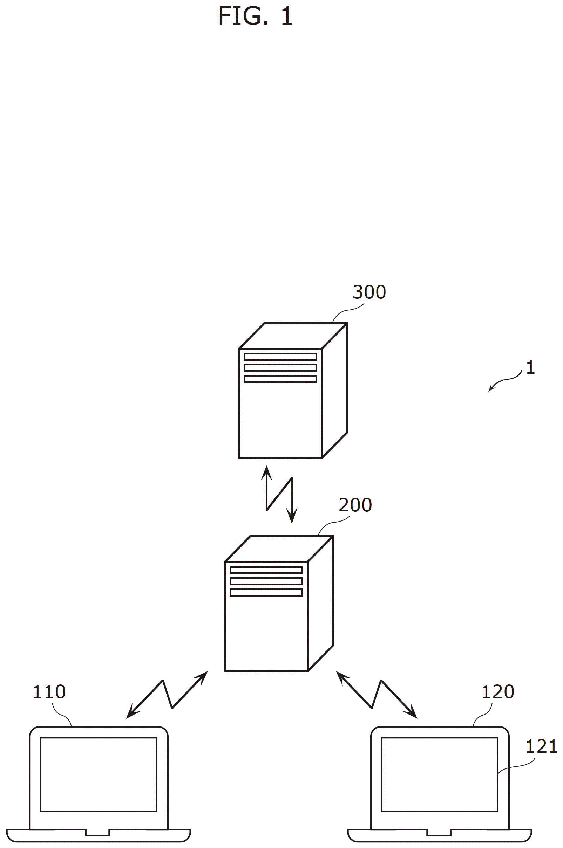

   FIG. 1 is a diagram illustrating the configuration of an information processing system according to Embodiment 1.
[FIG. 2]

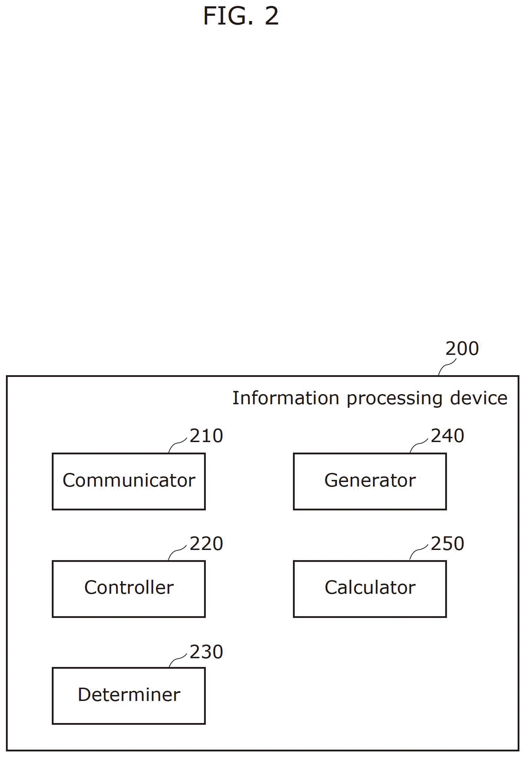

   FIG. 2 is a block diagram illustrating the functional configuration of an information processing device according to Embodiment 1.
[FIG. 3]

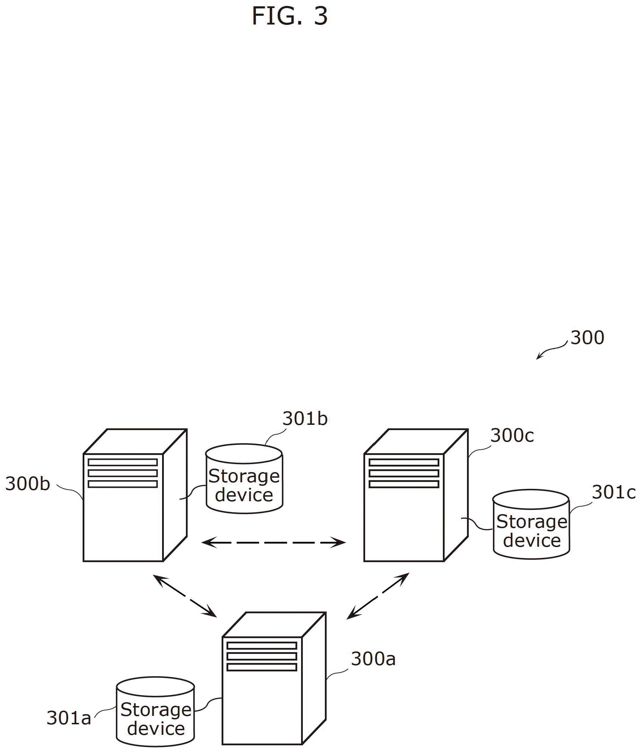

   FIG. 3 is a diagram illustrating an example of the configuration of a storage system according to Embodiment 1.
[FIG. 4]

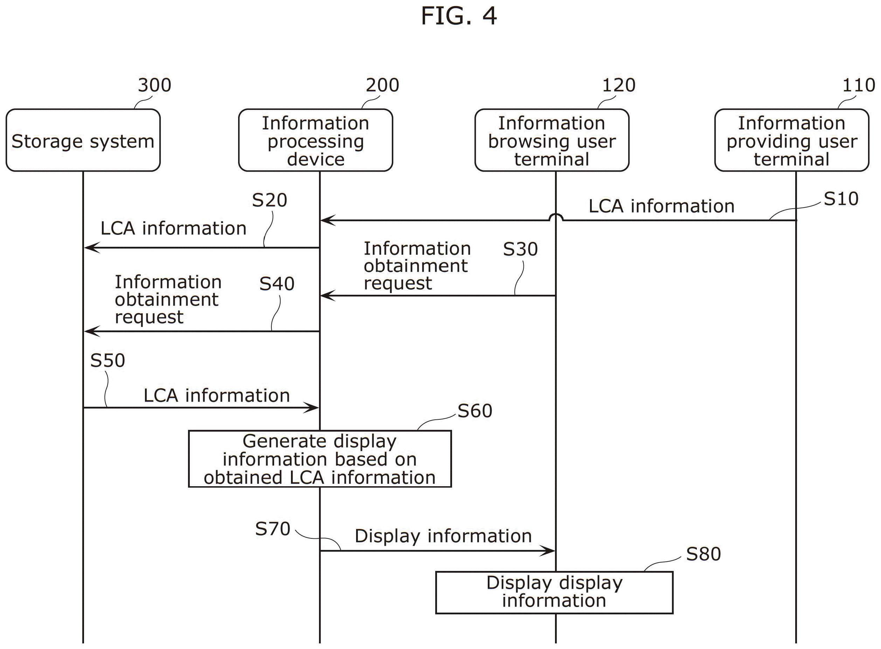

   FIG. 4 is a sequence diagram illustrating the operation of the information processing system according to Embodiment 1.
[FIG. 5A]

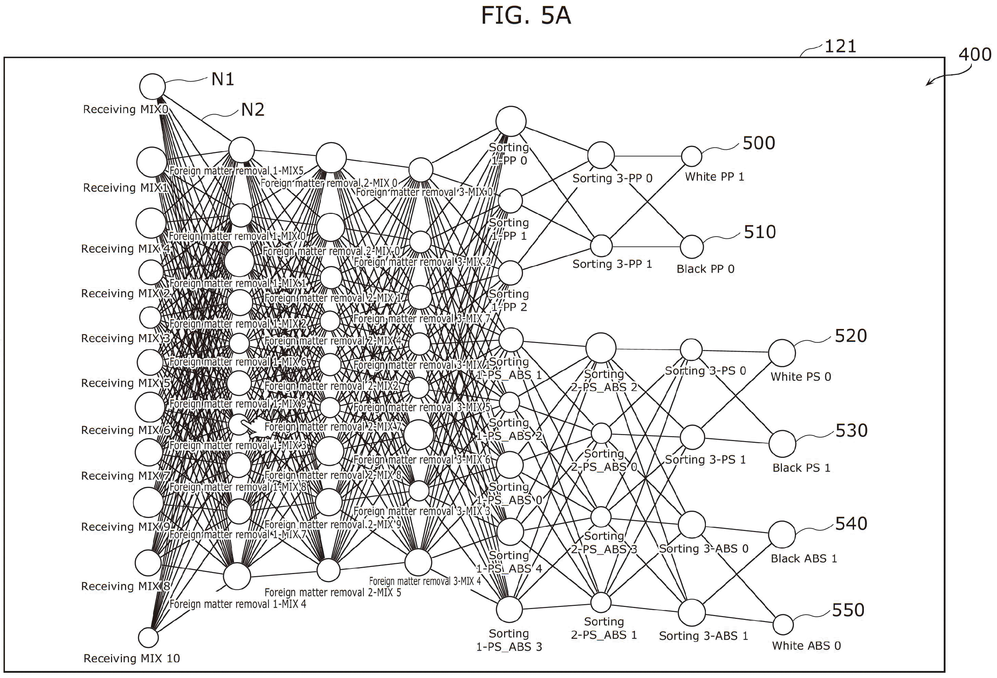

   FIG. 5A is a diagram illustrating an example of a display screen of display information according to Embodiment 1.
[FIG. 5B]

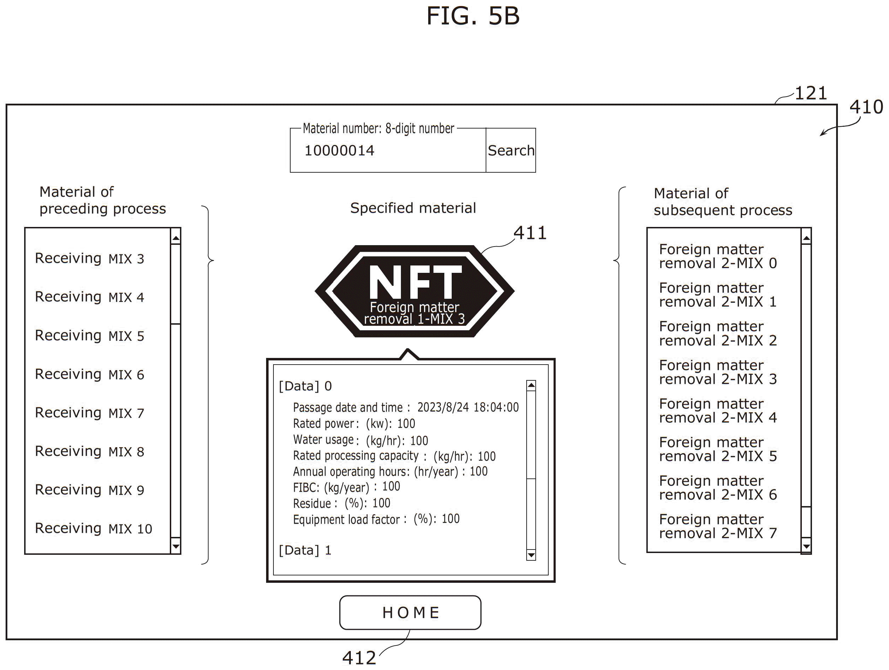

   FIG. 5B is a diagram illustrating an example of a display screen of an NFT according to Embodiment 1.
[FIG. 6]

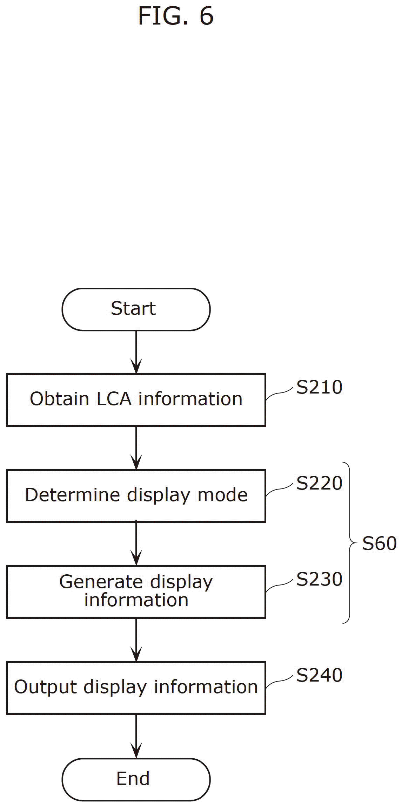

   FIG. 6 is a flowchart illustrating the operation of the information processing device according to Embodiment 1.
[FIG. 7A]

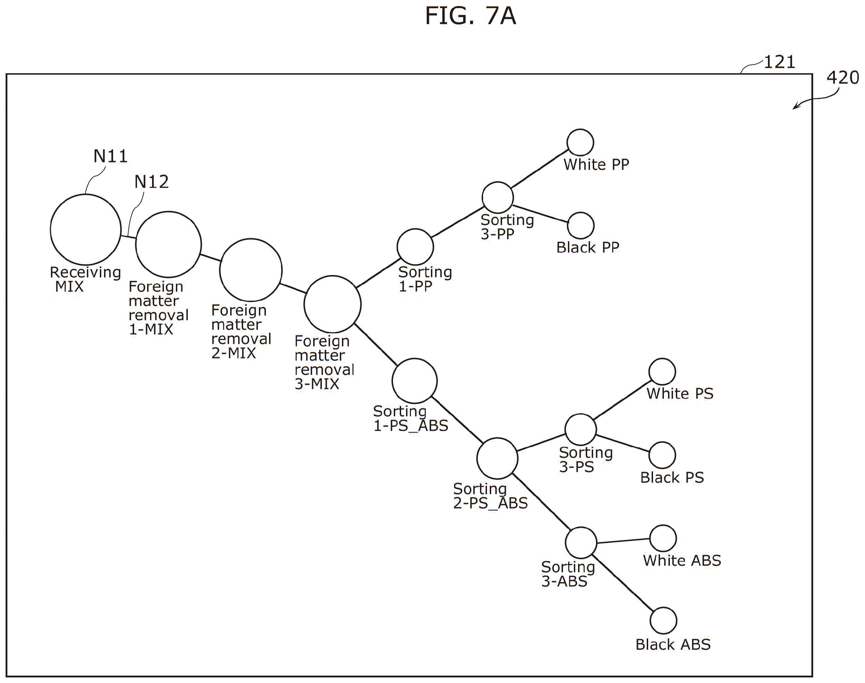

   FIG. 7A is a diagram illustrating an example of a display screen of display information when zoomed out.
[FIG. 7B]

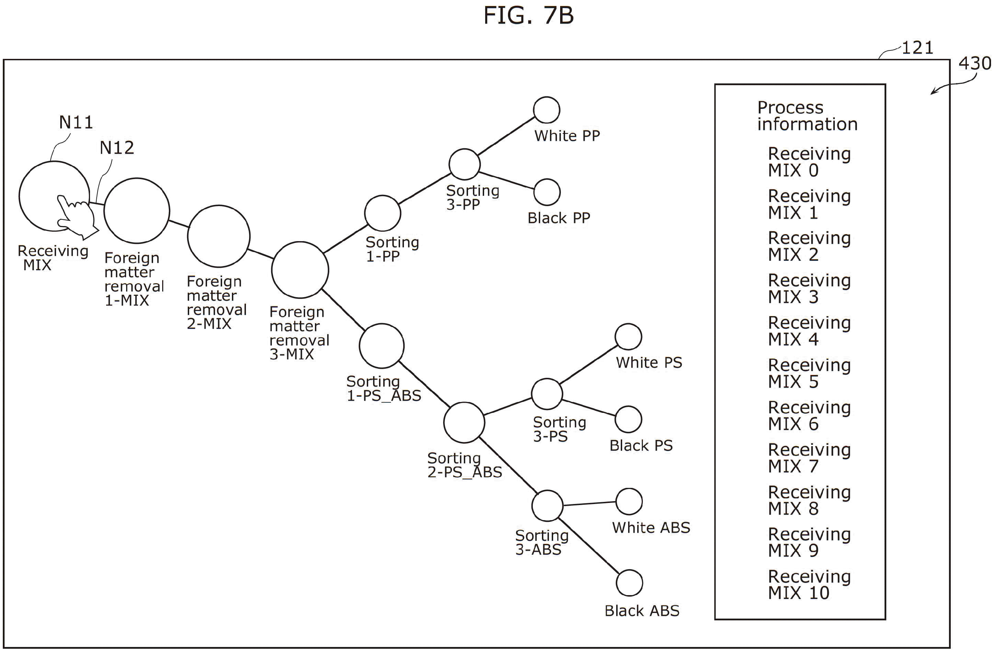

   FIG. 7B is a diagram illustrating an example of a display screen when a first figure displayed in a zoomed-out state is selected.
[FIG. 7C]

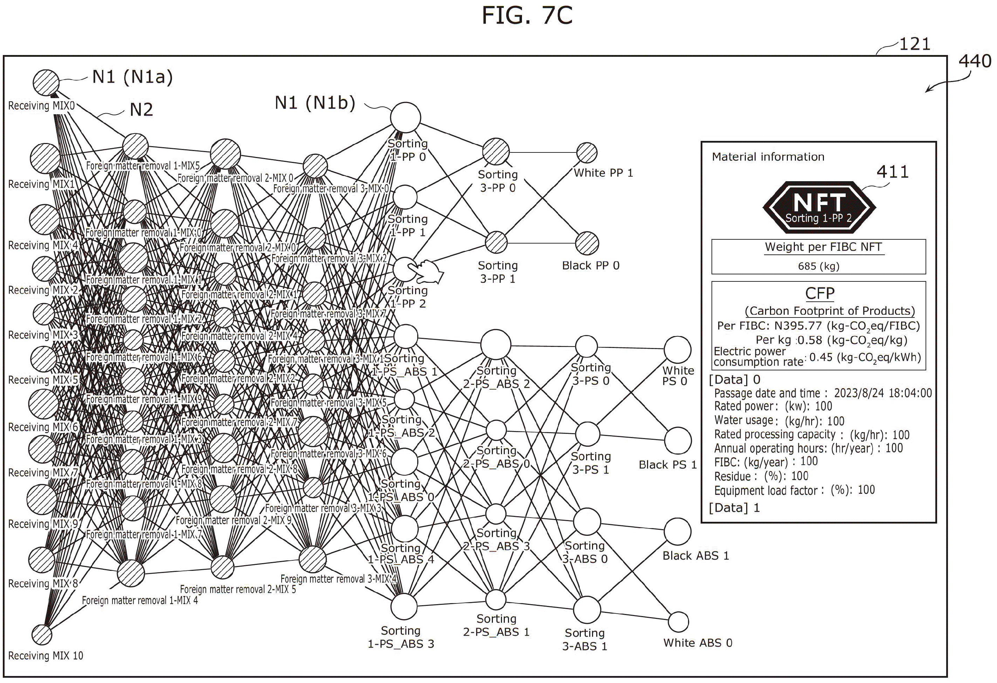

   FIG. 7C is a diagram illustrating another example of a display screen of display information according to Embodiment 1.
[FIG. 8A]

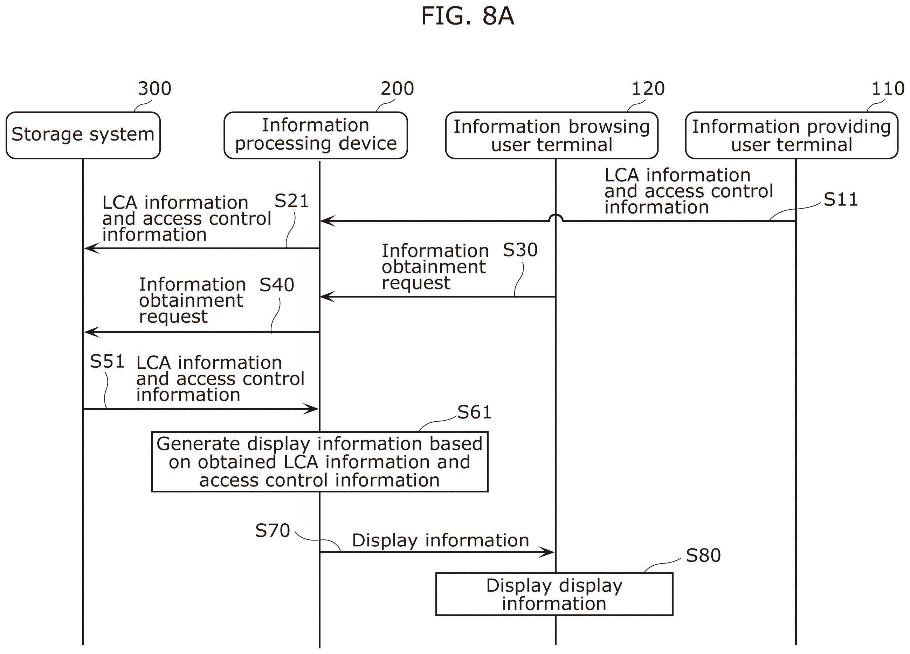

   FIG. 8A is a sequence diagram illustrating the operation of an information processing system according to Embodiment 2.
[FIG. 8B]

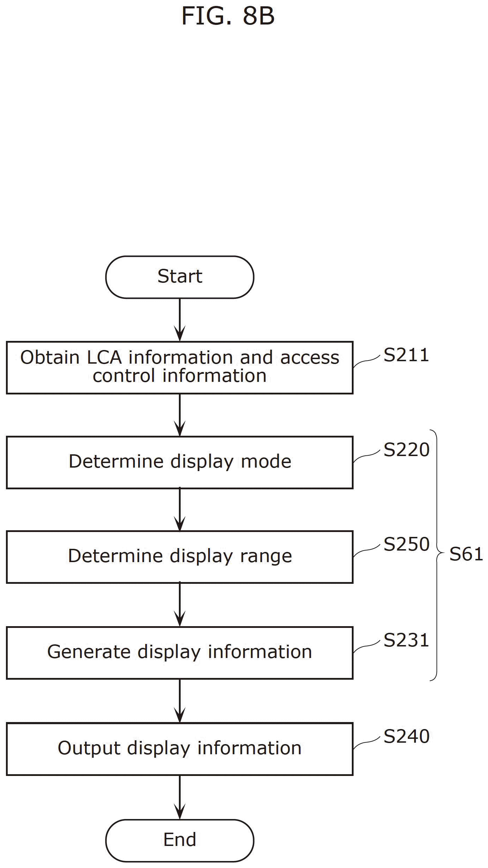

   FIG. 8B is a flowchart illustrating the operation of an information processing device according to Embodiment 2.
[FIG. 9A]

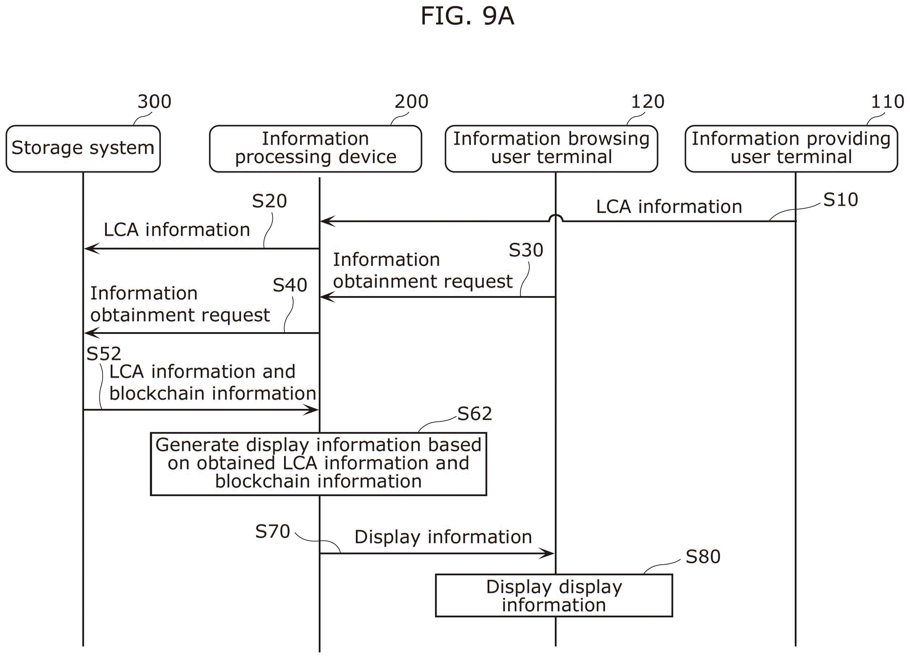

   FIG. 9A is a sequence diagram illustrating the operation of an information processing system according to Embodiment 3.
[FIG. 9B]

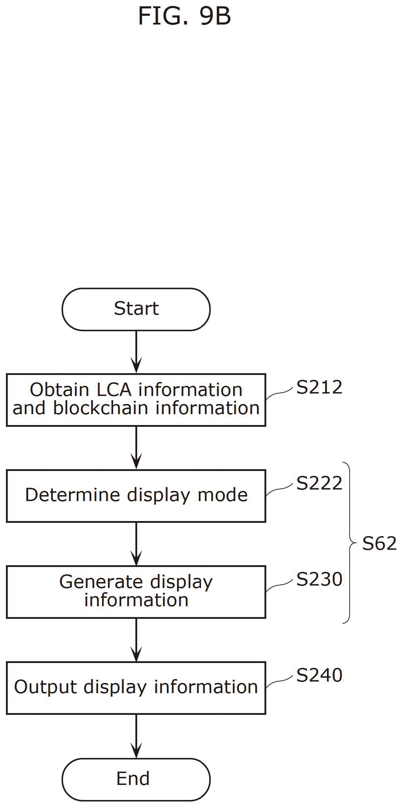

   FIG. 9B is a flowchart illustrating the operation of an information processing device according to Embodiment 3.
[FIG. 10]

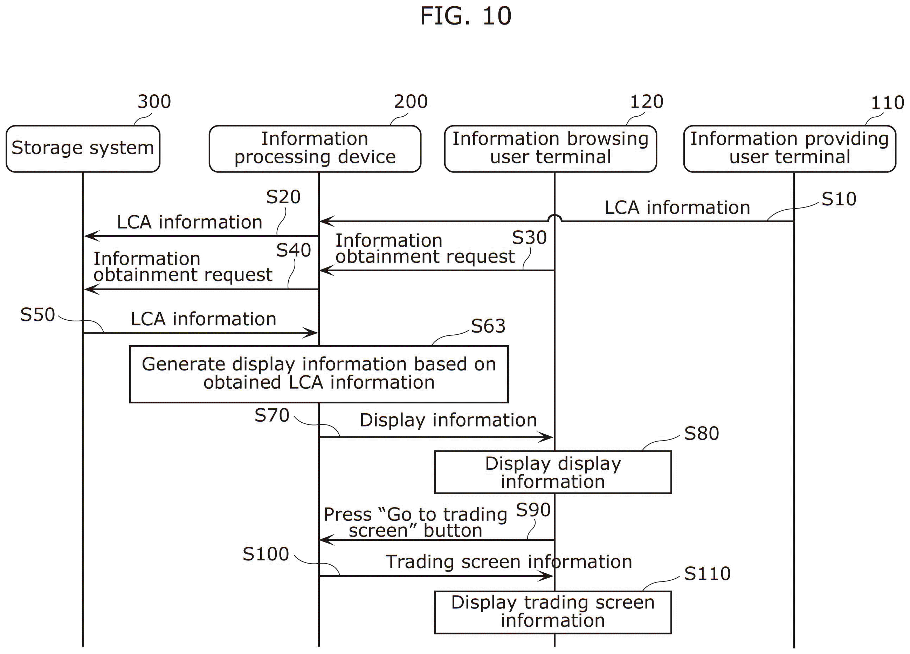

   FIG. 10 is a sequence diagram illustrating the operation of an information processing system according to Embodiment 4.
[FIG. 11]

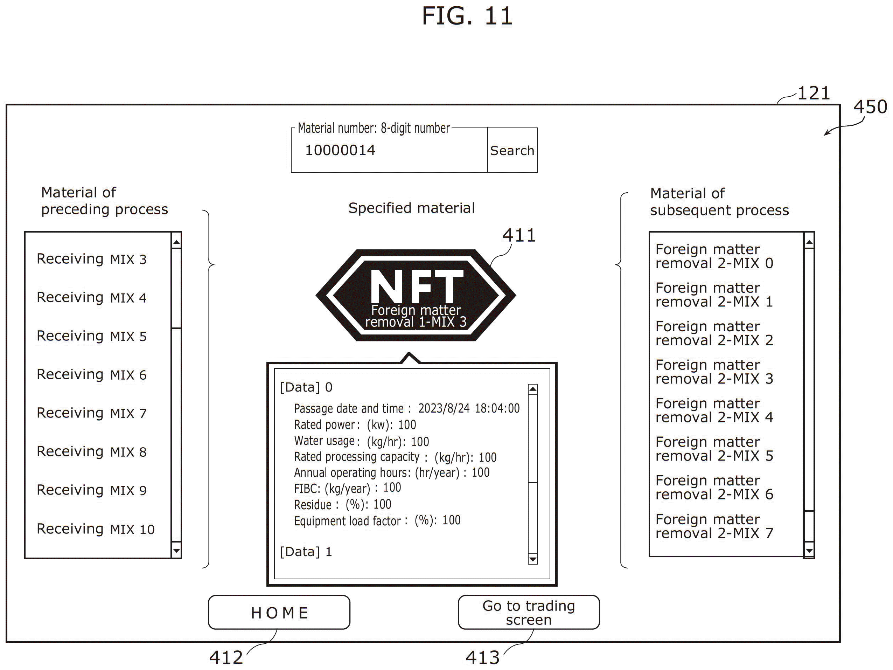

   FIG. 11 is a diagram illustrating an example of a display screen of an NFT according to Embodiment 4.
[FIG. 12]

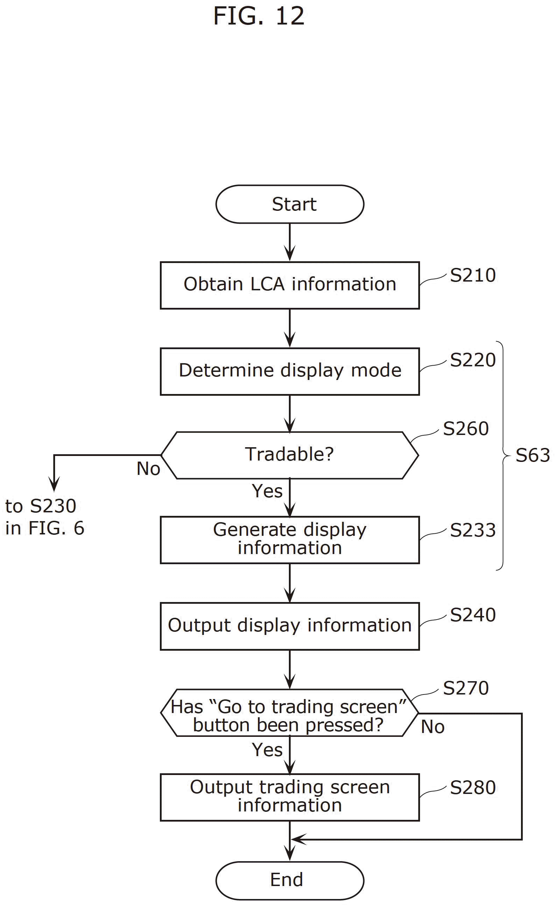

   FIG. 12 is a flowchart illustrating the operation of an information processing device according to Embodiment 4.
[FIG. 13]

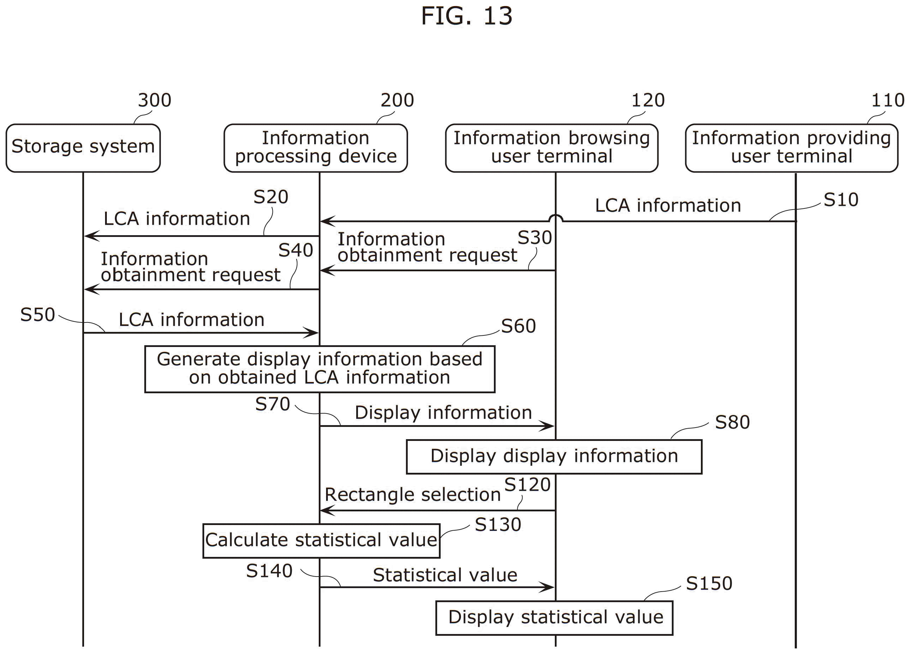

   FIG. 13 is a sequence diagram illustrating the operation of an information processing system according to Embodiment 5.
[FIG. 14]

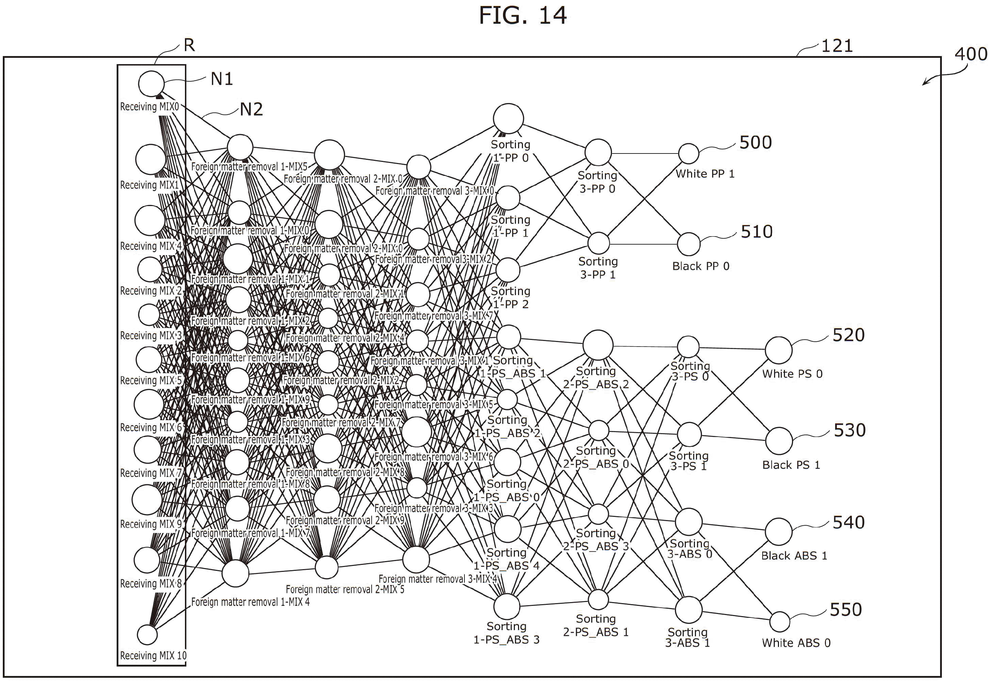

   FIG. 14 is a diagram for explaining selection of a rectangular region according to Embodiment 5.
[FIG. 15]

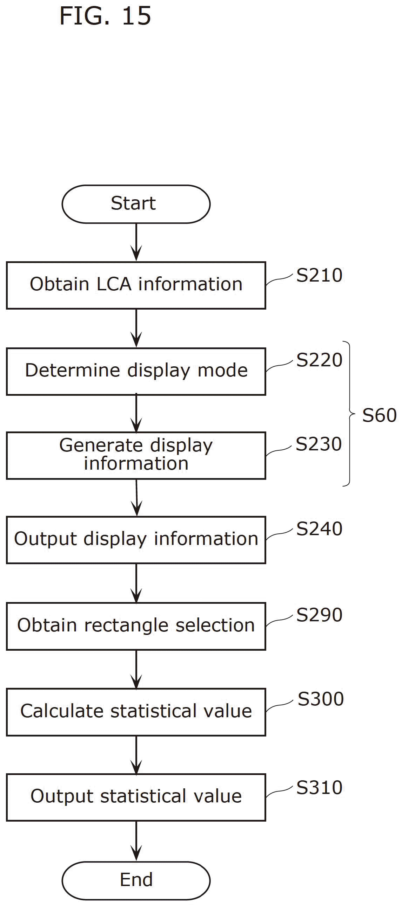

   FIG. 15 is a flowchart illustrating the operation of an information processing device according to Embodiment 5.
[FIG. 16]

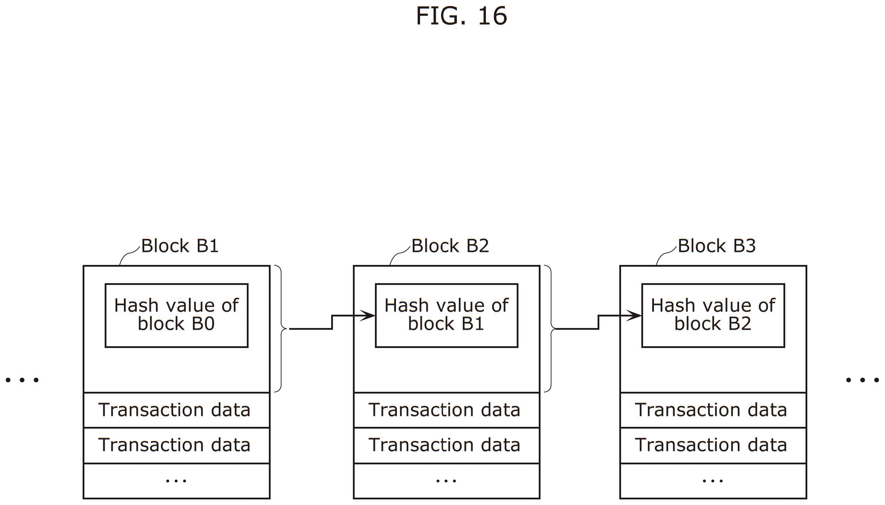

   FIG. 16 is an explanatory diagram illustrating the data structure of a blockchain.
[FIG. 17]

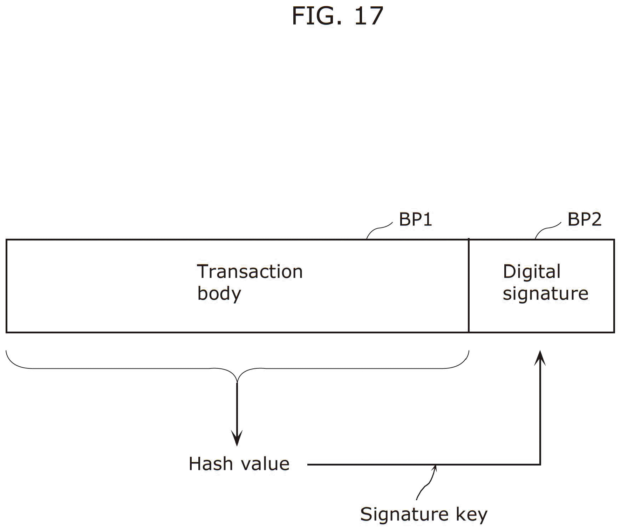

   FIG. 17 is an explanatory diagram illustrating the data structure of transaction data.
[FIG. 18]

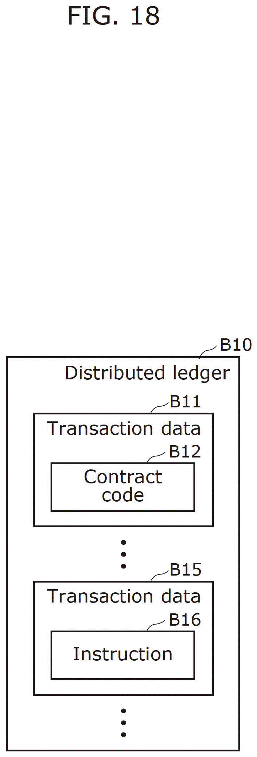

   FIG. 18 is an explanatory diagram illustrating transaction data related to execution of a smart contract.
[FIG. 19]

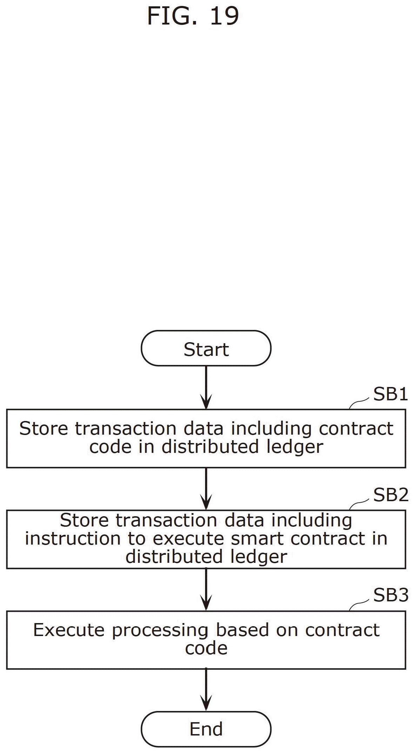

   FIG. 19 is an explanatory diagram illustrating processing related to execution of a smart contract.
[FIG. 20]

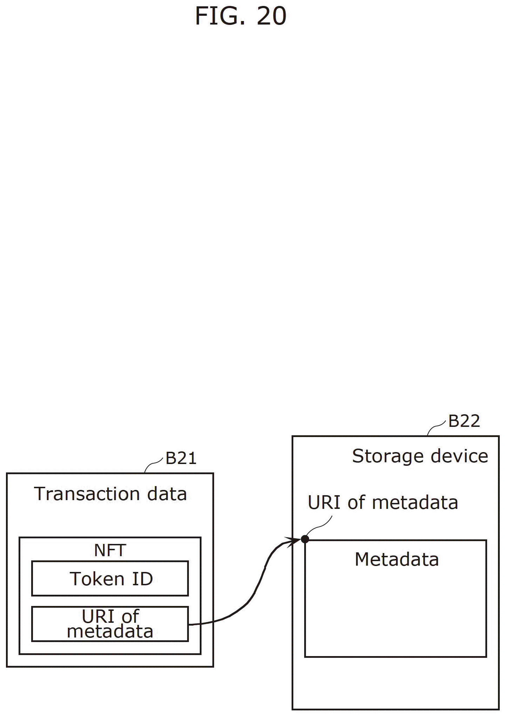

   FIG. 20 is an explanatory diagram illustrating the structure of an NFT and metadata.

### [Description of Embodiments]

### (Circumstances Leading to the Present Disclosure)

Prior to describing the embodiments of the present disclosure, the circumstances that led to the present disclosure will be described.

In recent years, in contrast to the conventional premise on mass production, mass consumption, and mass disposal, it has become a global trend to aim for a transition toward a system that increases dependence on renewable resources and enables raw materials and products to continue to be used, that is, a transition toward a resource-circulating economy (circular economy). In order to realize circular economy, it is desirable that information related to resources and materials is traceable and visible. For example, it is desirable that each process in the entire supply chain, from procurement of raw materials to completion of production, is visualized in a traceable manner.

For example, in evaluation of a product life cycle (also referred to as life cycle assessment (LCA)), measurement of a carbon footprint (CFP) and the like may be performed. In measurement of a CFP, the amount of activity in the manufacturing process of the product is derived using operational results in the manufacturing process. The amount of activity is a quantity that serves as the basis for the amount of CO₂ (carbon dioxide) emissions in the manufacturing process, and may be expressed as, for example, the amount of material used (kg) or the amount of electric power consumed (kWh). It may be desirable that such information be visualized or be easily obtained from visualized information.

However, in NPL 1, only what kind of processing is performed in each process is visualized. Such information does not provide information on the material handled in each process and the relationships of materials between processes, and is therefore considered insufficient for realizing circular economy.

Accordingly, the inventors of the present application have conducted intensive studies on an information processing method, etc. capable of assisting in visualizing more appropriate information related to product manufacturing, and have conceived the information processing method, etc. described below.

Specifically, in an information processing method according to the present disclosure, one figure (a first figure described later) is assigned to each processing unit of a material handled in each process, and display information including the first figures and one or more figures (second figures described later) indicating the relationships of the first figures between the processes is generated as information for visualization. Thus, information such as which materials are mixed with each other can be displayed on a single screen. Such information can serve as information more suitable for realizing circular economy.

The term "processing unit" denotes a unit (e.g., a minimum unit) in which a material is handled in a company (e.g., a factory), and a predetermined container, a predetermined quantity, or the like may constitute one unit. For example, when handling plastic, a flexible container may constitute one unit.

An information processing method according to a first aspect of the present disclosure includes: obtaining a request to provide display information including a history of one or more processes executed when manufacturing a product; obtaining history information of each of the one or more processes for the product in response to the request; generating the display information based on the history information obtained for each of the one or more processes; and outputting the display information generated, wherein the one or more processes include a process of manufacturing a second object from a first object for manufacturing the product, and the display information includes information for displaying an image that includes: a plurality of first figures corresponding one-to-one to objects in the one or more processes; and a second figure corresponding to a flow of the objects for manufacturing the second object from the first object via the one or more processes.

Thus, by displaying display information including a plurality of first figures corresponding one-to-one to objects and a second figure indicating the flow of objects, it is possible to display an image from which a user can easily obtain information on, for example, the material handled in each process and the relationships of materials between processes. An information processing method capable of assisting in visualizing more appropriate information related to product manufacturing can therefore be provided.

For example, an information processing method according to a second aspect may be the information processing method according to the first aspect, wherein the history information includes at least one item of information from among a weight of an object among the objects, greenhouse gas emissions in a corresponding process among the one or more processes, a unit price of the object, and a size of the object, and a display mode of either a first figure among the plurality of first figures or the second figure or both the first figure and the second figure is changed based on the at least one item of information.

Thus, the history information can be visualized in a manner that makes it intuitively easy to understand the differences in at least one of object weight, greenhouse gas emissions in the process, object unit price, or object size.

For example, an information processing method according to a third aspect may be the information processing method according to the second aspect, wherein the first figure is a two-dimensional figure, and at least one of a size, a color, or a shape of the first figure is changed based on the at least one item of information.

Thus, it is possible to assist in providing, using the first figure, such display that makes the foregoing differences intuitively easy to understand.

For example, an information processing method according to a fourth aspect may be the information processing method according to the second aspect or the third aspect, wherein the second figure is a one-dimensional figure, and at least one of a thickness, a direction, a length, a color, or a shape of the second figure is changed based on the at least one item of information.

Thus, it is possible to assist in providing, using the second figure, such display that makes the foregoing differences intuitively easy to understand.

For example, an information processing method according to a fifth aspect may be the information processing method according to any of the first aspect to the fourth aspect, including: obtaining access control information for controlling access to the history information of the product, wherein the display information includes information for displaying an image including a display restriction that is in accordance with the access control information.

This allows for display restriction, thereby preventing unnecessary information from being displayed.

For example, an information processing method according to a sixth aspect may be the information processing method according to the fifth aspect, wherein the access control information includes at least one of: hiding information identifying at least one process among the one or more processes; hiding, among the plurality of first figures, each first figure corresponding to at least one process among the one or more processes; or degrading image quality of at least part of a region.

Thus, by at least one of: hiding information identifying at least one process among the one or more processes; hiding, among the plurality of first figures, each first figure corresponding to at least one process among the one or more processes; or degrading image quality of at least part of a region, it is possible to prevent unnecessary information from being displayed.

For example, an information processing method according to a seventh aspect may be the information processing method according to the fifth aspect or the sixth aspect, wherein whether to implement the display restriction is determined depending on whether a transmission source of the request is a company included in a supply chain of the product.

This prevents unnecessary information from being displayed to a company included in the supply chain of the product.

For example, an information processing method according to an eighth aspect may be the information processing method according to any of the first aspect to the seventh aspect, wherein the history information includes non-fungible tokens (NFTs) associated one-to-one with the objects, and the plurality of first figures are provided in one-to-one correspondence with the NFTs.

Thus, since the NFTs and the first figures are associated one-to-one with each other, it is possible to assist in providing display that eases understanding of the flow of objects in each process.

For example, an information processing method according to a ninth aspect may be the information processing method according to the eighth aspect, wherein the NFTs are issued for respective processing units of a material used in a corresponding process among the one or more processes.

This assists in providing display that eases understanding of the flow of objects in finer units, such as processing units of materials.

For example, an information processing method according to a tenth aspect may be the information processing method according to the eighth aspect or the ninth aspect, wherein the NFTs are issued for respective containers accommodating a material used in a corresponding process among the one or more processes.

This assists in providing display that eases understanding of the flow of objects in units of containers.

For example, an information processing method according to an eleventh aspect may be the information processing method according to any of the eighth aspect to the tenth aspect, wherein the history information of each of the one or more processes is stored in one or more blockchains, the information processing method further includes: obtaining blockchain information regarding the one or more blockchains in which the history information of each of the one or more processes is stored; and switching a display mode of either a first figure among the plurality of first figures or the second figure or both the first figure and the second figure, based on the blockchain information obtained.

Thus, differences in blockchain information or the like can be reflected in the display. For example, this assists in providing display that eases understanding of whether the blockchains in which NFTs are stored are the same or different.

For example, an information processing method according to a twelfth aspect may be the information processing method according to the eleventh aspect, wherein, when a selection of one first figure among the plurality of first figures is received, an NFT associated with an object corresponding to the one first figure is displayed, and the switching of the display mode includes changing a display mode of at least one from among: a color of text or background on a display screen of the NFT; and an icon on the display screen.

Thus, by changing the display screen of the NFT, differences in blockchain information, etc. can be visualized.

For example, an information processing method according to a thirteenth aspect may be the information processing method according to any of the first aspect to the twelfth aspect, wherein the display information includes information for purchasing at least one object corresponding to at least one first figure among the plurality of first figures.

This assists a user in purchasing the object (e.g., a material) corresponding to the first figure.

For example, an information processing method according to a fourteenth aspect may be the information processing method according to any of the first aspect to the thirteenth aspect, including: when a selection of two or more first figures among the plurality of first figures included in the display information is received after the display information is output, calculating statistical information of respective objects corresponding to the two or more first figures selected; and outputting the statistical information calculated to an output destination of the display information.

This assists in providing display from which statistical information for the selected first figure can be easily obtained.

For example, an information processing method according to a fifteenth aspect may be the information processing method according to any of the first aspect to the fourteenth aspect, including: when a selection of one first figure among the plurality of first figures included in the display information is received after the display information is output, changing a display mode of one or more first figures, among the plurality of first figures, corresponding to one or more other objects related in the manufacturing of the product to an object corresponding to the one first figure selected.

This assists in providing display from which the correspondence between the object corresponding to the selected first figure and objects corresponding to the preceding and succeeding processes can be easily obtained.

For example, an information processing method according to a sixteenth aspect may be the information processing method according to any of the first aspect to the fifteenth aspect, wherein, when a display screen of the display information is zoomed out after the display information is output, two or more first figures corresponding to a same process among the plurality of first figures are displayed as one figure.

This prevents the display from becoming difficult to see when the display screen is zoomed out.

For example, an information processing method according to a seventeenth aspect may be the information processing method according to any of the first aspect to the sixteenth aspect, wherein the history information of the product includes information for life cycle assessment of the product.

This effectively assists in execution of life cycle assessment.

An information processing device according to an eighteenth aspect of the present disclosure includes: a first obtainer that obtains a request to provide display information including a history of one or more processes executed when manufacturing a product; a second obtainer that obtains history information of each of the one or more processes for the product in response to the request; a generator that generates the display information based on the history information obtained for each of the one or more processes; and an outputter that outputs the display information generated, wherein the one or more processes include a process of manufacturing a second object from a first object for manufacturing the product, and the display information includes information for displaying an image that includes: a plurality of first figures corresponding one-to-one to objects in the one or more processes; and a second figure corresponding to a flow of the objects for manufacturing the second object from the first object via the one or more processes.

This achieves the same effects as the information processing method described above.

A program according to a nineteenth aspect of the present disclosure is a program for causing a computer to execute the information processing method according to any of the first aspect to the seventeenth aspect.

This achieves the same effects as the information processing method described above.

These general and specific aspects may be implemented using a system, a method, an integrated circuit, a computer program, or a non-transitory computer-readable recording medium such as CD-ROM, or any combination of a system, a method, an integrated circuit, a computer program, and a recording medium. The program may be stored in the recording medium beforehand, or supplied to the recording medium via a wide area communication network such as the Internet.

Certain exemplary embodiments will be described in detail below with reference to the drawings.

Each of the embodiments described below shows a general or specific example. The numerical values, structural elements, the arrangement and connection of the structural elements, steps, the processing order of the steps etc. illustrated in the following embodiments are mere examples, and do not limit the scope of the present disclosure. Of the structural elements in the embodiments described below, the structural elements not recited in any one of the independent claims will be described as optional structural elements.

Each drawing is a schematic and does not necessarily provide precise depiction. The substantially same elements are given the same reference marks throughout the drawings, and repeated description is omitted or simplified.

In the specification, the terms indicating the relationships between elements, such as "same", the terms indicating the shapes of elements, such as "circle", "straight line", and "rectangle", the numerical values, and the numerical ranges are not expressions of strict meanings only, but are expressions of meanings including substantially equivalent ranges, for example, allowing for a difference of about several percent (or about 10%).

In the specification, ordinal numbers such as "first" and "second" do not mean the numbers or order of structural elements unless otherwise specified, but are used for the purpose of avoiding confusion and distinguishing between structural elements of the same type.

### [Embodiment 1]

An information processing system according to this embodiment will be described below with reference to FIGS. 1 to 7C.

### [1. Configuration of Information Processing System]

First, the configuration of the information processing system according to this embodiment will be described with reference to FIGS. 1 to 3. FIG. 1 is a diagram illustrating the configuration of information processing system 1 according to this embodiment.

As illustrated in FIG. 1, information processing system 1 includes information providing user terminal 110, information browsing user terminal 120, information processing device 200, and storage system 300. Information providing user terminal 110 and information browsing user terminal 120 are communicably connected to information processing device 200, and information processing device 200 is communicably connected to storage system 300. FIG. 1 illustrates an exemplary configuration of information processing system 1, and the configuration of information processing system 1 is not limited to that illustrated in FIG. 1. For example, information processing system 1 may be configured such that information providing user terminal 110 and information browsing user terminal 120 are directly communicable with storage system 300.

Information providing user terminal 110 is an information processing device owned by a company that provides information related to a product, and executes processing for storing the information in storage system 300. The company may be, for example, included in a supply chain in the production of the product. Information providing user terminal 110 is provided for each company included in the supply chain. That is, the number of information providing user terminals 110 included in information processing system 1 is not limited to one, and may be two or more.

The information related to the product includes at least one of: predetermined information related to the manufacture of the product; information related to the environmental impact (e.g., emissions of greenhouse gases (GHGs) such as CO₂) of the product; information related to the unit price of the product; or information related to the dimensions (e.g., volume) of the product. The information related to the environmental impact of the product may include, for example, information for implementing LCA regarding the environmental impact at the manufacturing stage in the life cycle of the product.

For example, the information related to the product may include at least one item of information from among the weight of an object in the process, the greenhouse gas emissions in the process, the unit price of the object, and the size of the object. Herein, the weight of the object is, for example, the weight of the corresponding flexible container (e.g., one flexible container). The greenhouse gas emissions can be calculated, for example, based on the amount of greenhouse gases generated per unit power consumption (also referred to as an emission factor) and the amount of power consumption. For example, CO₂ emissions may be calculated as the greenhouse gas emissions. Instead of the greenhouse gas emissions, information from which the greenhouse gas emissions can be calculated may be included. The unit price may indicate the unit price of the produced object in the process. The size of the object may be the size of the flexible container.

The information related to the product may be information for each predetermined unit in each process of manufacturing the product. The predetermined unit may be a minimum unit in the process at the company, for example, information in units of containers such as flexible containers. Each process may be executed by one company (e.g., one factory) or by a plurality of companies (e.g., a plurality of factories). The information related to the product is an example of LCA information.

Information browsing user terminal 120 is an information processing device owned by a company that browses the information related to the product, and executes processing for browsing the information stored in storage system 300. The company may be, for example, a company included in the supply chain in the manufacture of the product, or a company not included in the supply chain. For example, information browsing user terminal 120 may be an information processing device owned by the same company that owns information providing user terminal 110.

Information browsing user terminal 120 includes display 121 for displaying display information generated by information processing device 200. Display 121 includes, for example, a display panel such as a liquid crystal panel, but is not limited to such.

Each of information providing user terminal 110 and information browsing user terminal 120 includes a processor, a memory, and the like. The memory includes, for example, a read only memory (ROM) and a random access memory (RAM), and can store programs executed by the processor. The functions of each of information providing user terminal 110 and information browsing user terminal 120 are implemented by, for example, the processor executing the programs stored in the memory. Each of information providing user terminal 110 and information browsing user terminal 120 may be implemented by a stationary personal computer (PC), a mobile terminal such as a smartphone or a tablet, a server device, or the like.

Information processing device 200 generates and outputs display information for displaying a plurality of items of information in association with each other based on a plurality of items of information related to the manufacture of the product. In this embodiment, the display information includes the history of one or more processes executed when manufacturing the product. Information processing device 200 generates and outputs information illustrated in FIGS. 5A and 5B (described later). This will be described in detail later.

FIG. 2 is a block diagram illustrating the functional configuration of information processing device 200 according to this embodiment.

As illustrated in FIG. 2, information processing device 200 includes communicator 210, controller 220, determiner 230, generator 240, and calculator 250. Information processing device 200 also includes a processor, a memory, and the like. The memory includes, for example, a ROM and a RAM, and can store programs executed by the processor. The functions of information processing device 200 are implemented by, for example, the processor executing the programs stored in the memory. Information processing device 200 may be implemented by a stationary PC, a mobile terminal such as a smartphone or a tablet, a server device, or the like.

Communicator 210 is a communication interface communicably connected to a communication network (not illustrated). Communicator 210 may be a communication interface conforming to a wired communication standard (e.g., Ethernet (registered trademark)), or a communication interface conforming to a wireless communication standard (e.g., Wi-Fi (registered trademark) or a mobile communication system (3G, 4G, 5G, etc.)). Communicator 210 is used when a functional unit included in information processing device 200 communicates with another device. For example, communicator 210 is used when a functional unit included in information processing device 200 communicates with any of information providing user terminal 110, information browsing user terminal 120, and storage system 300. Communicator 210 functions as an obtainer (first obtainer, second obtainer) that obtains various information and an outputter that outputs various information. Communicator 210 may include, for example, a communication circuit (or a communication module).

Controller 220 is a control device that controls each functional unit in information processing device 200. Controller 220 performs processing on information obtained via communicator 210, processing for generating display information, and the like.

Determiner 230 performs various determinations regarding generation of display information based on information obtained from storage system 300. In this embodiment, for example, determiner 230 determines the display modes of a first figure and a second figure (described later) based on information obtained from storage system 300. Specific examples of the display modes include the shape, size, color, and thickness of a figure, which will be described later.

Generator 240 generates display information for causing information browsing user terminal 120 to display an image, based on the information obtained from storage system 300 and the determination result of determiner 230. The display information includes information for displaying an image that includes: a plurality of first figures corresponding one-to-one to objects in each of one or more processes executed when manufacturing the product; and a second figure corresponding to the flow of objects for manufacturing a second object from a first object via the one or more processes. For example, generator 240 generates display information for displaying display screens illustrated in FIGS. 5A and 5B (described later). The plurality of first figures correspond one-to-one to objects used in each of the one or more processes.

Calculator 250, upon receiving a selection of two or more first figures among the plurality of first figures included in the display information after the display information is output, calculates statistical information for the objects corresponding to the selected two or more first figures.

Information processing device 200 may not include determiner 230. That is, information processing device 200 may generate display information in a predetermined display mode based on information obtained from storage system 300. Information processing device 200 may not include calculator 250.

Referring again to FIG. 1, storage system 300 stores information from information providing user terminal 110. Storage system 300 may be implemented by, for example, a server device including a database that holds the information. The database is stored in, for example, a storage device such as a memory included in the server device.

Storage system 300 may also be implemented by a distributed ledger system. The configuration of storage system 300 when implemented as a distributed ledger system will be described with reference to FIG. 3. FIG. 3 is a diagram illustrating an example of the configuration of storage system 300 according to this embodiment.

As illustrated in FIG. 3, storage system 300 may include ledger servers 300a, 300b, and 300c. These ledger servers 300a, 300b, and 300c are communicably connected via a communication network. Ledger servers 300a, 300b, and 300c are also collectively referred to as ledger servers 300a, etc. Storage devices 301a, 301b, and 301c are also collectively referred to as storage devices 301a, etc.

Ledger servers 300a, etc. are connected to storage devices 301a, etc. Ledger servers 300a, etc. may be connected to storage devices 301a, etc. via a communication network, or may include storage devices 301a, etc. internally. Storage devices 301a, etc. have a distributed ledger in which blockchain transaction data and blocks are electronically recorded. For example, the distributed ledger stores information related to NFTs (specifically, the history of NFT generation, etc.). Ledger servers 300a, 300b, and 300c constitute the distributed ledger system. Ledger servers 300a, etc. are node terminals of the distributed ledger system.

For example, the distributed ledger system stores information related to the manufacture of the product (such as transaction data). The transaction data includes transaction data indicating the transfer of tokens between users (companies). The tokens include at least non-fungible tokens (NFTs). The tokens may also include general value information (monetary value or information corresponding to monetary value). An "NFT" is a token having non-fungibility, and is typically a token conforming to ERC721, the Ethereum blockchain standard, but may also be a token conforming to another standard, a non-standard token, or a token other than Ethereum. While ERC721 is a unique token standard, the NFTs referred to in this specification do not necessarily need to be unique; for example, one NFT corresponding to ten objects may be used. Moreover, a plurality of NFTs may be assigned to the same object; for example, the same object may have different NFTs today and tomorrow, or the same object may have different NFTs for organization A and organization B.

Storage system 300 only needs to include at least one of a server device or a distributed ledger system. For example, storage system 300 may include both a server device and a distributed ledger system. By including both a server device and a distributed ledger system, storage system 300 can select, depending on information to be stored, which device is to store the information.

### [2. Operation of Information Processing System]

Next, the operation of information processing system 1 with the above-described configuration will be described with reference to FIGS. 4 to 7C. FIG. 4 is a sequence diagram illustrating the operation (information processing method) of information processing system 1 according to this embodiment. In FIGS. 4 to 7C, an example will be described in which information processing device 200 includes determiner 230 and does not include calculator 250. Further, an example will be described in which storage system 300 includes at least a distributed ledger system.

As illustrated in FIG. 4, first, information providing user terminal 110 transmits LCA information related to product manufacturing to information processing device 200, and information processing device 200 receives the LCA information (S10). Information providing user terminal 110 outputs, for example, user authentication information to information processing device 200, and after access is permitted by information processing device 200, outputs the LCA information to information processing device 200. The LCA information may include, for example, information for performing life cycle assessment on the product. The LCA information can be regarded as history information indicating the manufacturing history.

If the product is manufactured across a plurality of companies, LCA information related to the processes at each of the plurality of companies is obtained from the company.

Next, information processing device 200 outputs the LCA information to storage system 300 (S20). In the case of storing the LCA information in the distributed ledger, information processing device 200 generates transaction data including a request to register the LCA information as an NFT, and outputs the generated transaction data to a ledger server included in the distributed ledger system of storage system 300. The transaction data includes the LCA information or a uniform resource identifier (URI) of the LCA information. Here, the "ledger server included in the distributed ledger system" is assumed to be ledger server 300a as an example, but may be another ledger server 300b or 300c included in the distributed ledger system. The same applies hereinafter.

Ledger server 300a obtains the output transaction data and performs verification. If the verification is successful, ledger server 300a issues an NFT-ID. Ledger server 300a then stores, in the distributed ledger, registration information for registering the LCA information as an NFT. The registration information includes the NFT-ID of the NFT to be registered and the LCA information in association with each other. Thus, the LCA information is stored in storage system 300. Ledger server 300a also outputs the NFT-ID to information processing device 200. In the following description, it is assumed that each item of LCA information from start to end (completion) of product manufacturing is stored in storage system 300.

Although the above describes an example in which LCA information is stored in the distributed ledger of storage system 300, the information may be stored in the server device depending on the content of the information or an instruction from a user.

Next, information browsing user terminal 120 transmits an information obtainment request for the product to information processing device 200, and information processing device 200 obtains the information obtainment request from information browsing user terminal 120 (S30). Information processing device 200 then outputs the obtained information obtainment request to storage system 300 (S40). Thus, upon receiving the information obtainment request from information browsing user terminal 120, information processing device 200 outputs, to storage system 300, a request to read corresponding information (e.g., corresponding NFTs). The information obtainment request is an example of a provision request. For example, information browsing user terminal 120 outputs user authentication information to information processing device 200, and after access is permitted by information processing device 200, outputs the information obtainment request to information processing device 200. The information obtainment request is an example of a request to provide display information.

The information obtainment request output in Step S40 may be transaction data including a request to present an NFT. In this case, identification information (e.g., NFT-ID) of the NFT to be obtained in response to the information obtainment request may be included in the information obtainment request. The information obtainment request may also include a request to present data in a database. In this case, identification information (e.g., address) of the data to be obtained in response to the information obtainment request may be included in the information obtainment request.

Next, storage system 300 outputs LCA information corresponding to the information obtainment request to information processing device 200, and information processing device 200 obtains the LCA information in response to the information obtainment request (S50). In Step S50, information processing device 200 obtains, for example, history information related to product manufacturing (history information of each of the one or more processes; in this case, NFT for each predetermined unit in each of the one or more processes). There may be one or more NFTs in each process.

For example, if information stored in the distributed ledger system is required, storage system 300 reads the corresponding information from the distributed ledger and outputs the information to information processing device 200.

Next, information processing device 200 generates, based on the obtained LCA information, display information to be displayed on display 121 of information browsing user terminal 120 (S60). Details of Step S60 will be described later.

Next, information processing device 200 outputs the generated display information to information browsing user terminal 120, and information browsing user terminal 120 obtains the display information (S70).

Next, display 121 of information browsing user terminal 120 displays the display information (S80). In this way, information processing device 200, triggered by an information obtainment request from information browsing user terminal 120, obtains LCA information for each process for a product, and generates and outputs display information that can be useful in achieving circular economy.

An example of a display screen on which display information is displayed will be described with reference to each of FIGS. 5A and 5B. FIG. 5A is a diagram illustrating an example of display screen 400 of display information according to this embodiment. FIG. 5B is a diagram illustrating an example of NFT display screen 410 according to this embodiment. NFT display screen 410 is a screen for displaying detailed information. In FIGS. 5A and 5B, a display example is illustrated in which a product is manufactured from mixed plastics. In display screen 400 illustrated in FIG. 5A, the flow of a series of processes, the materials for each predetermined unit in each process, and the relationships of materials between processes are indicated using first figures N1 and second figures N2. FIG. 5A can be regarded as a screen displaying traceability information of the product. The display screen illustrated in FIG. 5A is hereinafter also referred to as a trace visualization screen.

FIG. 5A illustrates a plurality of processes executed when manufacturing a product from material, as a product manufacturing process. An object on which a process is executed is also referred to as a target object, and an object generated as a result of executing the process is also referred to as a produced object. The target object of the first process is a material. The produced object of the last process is a product. White PP 500, black PP 510, white PS 520, black PS 530, black ABS 540, and white ABS 550 illustrated in FIG. 5A are examples of products. For example, the products are shipped as recycled materials. "White XX" (e.g., white PP) means white-colored XX (e.g., white-colored PP), and "black XX" (e.g., black PS) means black-colored XX (e.g., black-colored PS).

Mixed plastics, also known as mixed resins, are a resin mixture obtained by mixing white PP (polypropylene resin), black PP, white PS (polystyrene resin), white ABS (acrylonitrile butadiene styrene resin), black PS, and black ABS. Mixed plastics are an example of a material.

The plurality of processes include receiving, foreign matter removal 1 to 3, and sorting 1 to 3. Receiving (receiving MIX 0 to 10) indicates a process of receiving mixed plastics (i.e., materials). In the process of receiving mixed plastics, a resin mixture in which products (white PP, black PP, white PS, black PS, black ABS, and white ABS) prior to execution of each process are mixed is received. Each of foreign matter removal 1 to 3 indicates a process of removing various foreign matter from the mixed plastics. Each of sorting 1 to 3 indicates a process of sorting resins from the mixed plastics, and includes, for example, water specific gravity sorting, color sorting, and electrostatic separation. The plurality of processes are sequentially executed from the left side of the drawing sheet. For example, black ABS is manufactured by sequential execution of receiving, foreign matter removal 1, foreign matter removal 2, foreign matter removal 3, sorting 1, sorting 2, and sorting 3.

As illustrated in FIG. 5A, display screen 400 of the display information includes circular first figures N1 in each process and linear (straight line) second figures N2 connecting first figures N1 between processes.

First figures N1 correspond one-to-one to objects. In this embodiment, one NFT is issued for one flexible container which is an example of an object, and the one NFT is represented as one first figure N1 in the display information. In other words, flexible containers and NFTs are associated one-to-one, and the NFTs and first figures N1 are associated one-to-one. NFTs are tokens associated one-to-one with objects, and here are associated one-to-one with flexible containers as an example of objects.

Thus, the plurality of first figures N1 are provided in one-to-one correspondence with NFTs. A flexible container is a container that accommodates the material (mixed plastics, etc. in this example) used in the process, and is a processing unit (e.g., minimum unit) of the material used in the process. In other words, an NFT may be issued for each processing unit of the material used in the process, for example, for each container used in the process. An NFT may be issued for each material.

First figure N1 is, for example, a two-dimensional figure. First figure N1 is not limited to being a circle, and may be a polygon, an ellipse, etc. First figure N1 may also be an image of the process or an illustration that evokes the process.

Second figure N2 is a one-dimensional figure indicating the relationship of objects between consecutive processes. On display screen 400, second figure N2 can be regarded as a figure indicating the relationship between a plurality of first figures N1. Second figure N2 is not limited to being a straight line, and may be an arrow, etc.

In the first process, i.e. the receiving process, eleven first figures N1 of receiving MIX 0 to 10 are illustrated. This indicates that there are eleven flexible containers that are to proceed to the next process, i.e. foreign matter removal 1.

The second process is a process of removing foreign matter (foreign matter removal 1). In foreign matter removal 1, the mixed plastics from the eleven flexible containers in the receiving process are mixed into one, a predetermined foreign matter removal process is performed, and the mixed plastics after the predetermined foreign matter removal are separated and placed back into flexible containers. Foreign matter removal 1-MIX 0 to 9 indicates that ten flexible containers are produced as a result of placing the mixed plastics after foreign matter removal into flexible containers. Foreign matter removal 1-MIX 0 to 9 may each involve a different foreign matter removal process. Since the mixed plastics from all flexible containers in the receiving process are mixed in foreign matter removal 1, second figure N2 from each of receiving MIX 0 to 10 is connected to each of foreign matter removal 1-MIX 0 to 9. The object corresponding to first figure N1 of each of foreign matter removal 1-MIX 0 to 9 is the produced object in the process of foreign matter removal 1, and is the target object in the process of foreign matter removal 2.

Displaying such information makes it possible to obtain information such as which processes an object corresponding to one first figure N1 has undergone and which material it has been mixed with. For example, it is possible to know from the information displayed on a single screen from which flexible container (i.e. mixed plastics in the flexible container) and through which processes white PP 500 as a product has been manufactured.

FIG. 5B illustrates NFT display screen 410 when first figure N1 of foreign matter removal 1-MIX 3 illustrated in FIG. 5A is selected (a finger is illustrated in FIG. 5A). When a selection of one of the plurality of first figures N1 illustrated in FIG. 5A is received, the NFT display screen corresponding to selected first figure N1 is displayed on display 121.

As illustrated in FIG. 5B, NFT display screen 410 includes icon 411 (NFT icon) indicating that information contained in the NFT is displayed, and information such as passage date and time, rated power, water usage, rated processing capacity, annual operating hours, flexible container, residue, and equipment load factor. A non-limiting example of icon 411 is the text "NFT" surrounded by a hexagonal frame. The "passage date and time" indicates the date and time when foreign matter removal 1 was executed. The "rated power" indicates the rated output of the device used in foreign matter removal 1. The "water usage" indicates the amount of water used to perform foreign matter removal 1 (or the cumulative amount of water used for foreign matter removal 1 in the past). The "rated processing capacity" indicates the processing capacity at the rated output when executing foreign matter removal 1. The "annual operating hours" indicate the operating time of the device from the beginning of the year to foreign matter removal 1. The "flexible container" indicates the amount of mixed plastics contained in the flexible container. The "residue" indicates the proportion of residue in foreign matter removal 1. The "equipment load factor" indicates the load factor of the equipment used in foreign matter removal 1. Each item value may be a cumulative value for the process of foreign matter removal 1 or a value for a single execution of the process of foreign matter removal 1.

Display screen 410 also displays information indicating the name of the preceding process and the name of the subsequent process, in addition to the NFT. That is, information that allows tracing the past and next processes related to the displayed NFT may be displayed simultaneously with the NFT. Display screen 410 further displays the material number (material identification information) for identifying the material. The NFT-ID of the NFT may be displayed.

Moreover, a "HOME" button (icon 412) is displayed for returning to the display in FIG. 5A.

Although an example has been described in which, when first figure N1 in FIG. 5A is selected, the display transitions to display screen 410 in FIG. 5B, the present disclosure is not limited to such. The display in FIG. 5A and the display in FIG. 5B may be presented on the same screen. For example, the display in FIG. 5A and the display in FIG. 5B may be presented simultaneously on the screen.

Next, the operation of information processing device 200 will be described with reference to FIG. 6. FIG. 6 is a flowchart illustrating the operation (information processing method) of information processing device 200 according to this embodiment. It is assumed in FIG. 6 that LCA information has already been stored in storage system 300, and a process of obtaining LCA information in response to an information obtainment request (the process from S50 onwards in FIG. 4) will be described. Steps S220 and S230 in FIG. 6 correspond to Step S60 in FIG. 4.

As illustrated in FIG. 6, communicator 210 in information processing device 200 obtains LCA information from storage system 300 in response to an information obtainment request from information browsing user terminal 120 (S210). Step S210 corresponds to Step S50 in FIG. 4.

Next, determiner 230 determines the display mode in the display information based on the LCA information obtained in Step S210 (S220). In Step S220, determiner 230 determines the display mode of at least one of first figure N1 or second figure N2.

The LCA information (NFT in this example) may include, for example, at least one item of information from among the weight of an object, greenhouse gas emissions in the process, the unit price of the object, and the size of the object. The LCA information may also include information such as passage date and time, rated power, water usage, rated processing capacity, annual operating hours, flexible container, residue, and equipment load factor, as illustrated in FIG. 5B. Further, the LCA information may include an identifier that uniquely identifies the preceding process and/or an identifier that uniquely identifies the subsequent process (for example, the identifiers may be NFT-IDs).

Determiner 230 may determine to change the display mode of first figure N1 from the standard mode if the at least one item of information is greater than or equal to a first threshold and/or if the at least one item of information is less than or equal to a second threshold that is lower than the first threshold. For example, determiner 230 may determine to change at least one of the size, color, or shape of first figure N1 from the standard mode. Taking size as an example, determiner 230 may determine to increase the size of first figure N1 from the standard size if the at least one item of information is greater than or equal to the first threshold, and determine to decrease the size of first figure N1 from the standard size if the at least one item of information is less than or equal to the second threshold.

Moreover, determiner 230 may determine to change the display mode of second figure N2 from the standard mode if the at least one item of information is greater than or equal to a third threshold and/or if the at least one item of information is less than or equal to a fourth threshold that is lower than the third threshold. For example, determiner 230 may determine to change at least one of the thickness, direction, length, color, or shape of second figure N2 from the standard mode. Taking thickness as an example, determiner 230 may determine to increase the thickness of second figure N2 from the standard thickness if the at least one item of information is greater than or equal to the third threshold, and determine to decrease the thickness of second figure N2 from the standard thickness if the at least one item of information is less than or equal to the fourth threshold.

Thus, determiner 230 may use information contained in the NFT to change the display mode of at least one of first figure N1 or second figure N2 such that the differences in the information contained in the NFT are intuitively easy to understand.

Determiner 230 may also identify the preceding or subsequent process for first figure N1 using identifier information (which may be an NFT-ID) uniquely identifying the preceding or subsequent process contained in the NFT, and determine to display second figure N2 so as to connect first figure N1 to the figure corresponding to the identified preceding or subsequent process.

Next, generator 240 generates display information for performing display reflecting the determination result of determiner 230 (S230). For example, generator 240 generates display information for displaying a trace visualization screen using first figures N1 (nodes) corresponding to NFTs as illustrated in FIG. 5A.

Next, communicator 210 outputs the display information to information browsing user terminal 120 (S240). As a result of this display information being displayed by display 121, display screen 400 illustrated in FIG. 5A is displayed.

Other types of display information generated by generator 240 will be described with reference to FIGS. 7A to 7C. FIG. 7A is a diagram illustrating an example of display screen 420 of display information when zoomed out. FIG. 7B is a diagram illustrating an example of display screen 430 when first figure N11 displayed in a zoomed-out state is selected.

FIG. 7A illustrates the image displayed on display 121 when information browsing user terminal 120 is operated to zoom out after the display illustrated in FIG. 5A is performed by display 121 (i.e., after display screen 400 is displayed). For example, zooming out causes the display in FIG. 5A to transition to the display in FIG. 7A.

When the zoom-out operation is performed, generator 240 generates display information including first figure N11 obtained by grouping a plurality of first figures N1 of each process and second figure N12 connecting first figures N11 of consecutive processes. In other words, zooming out causes the plurality of first figures N1 to be displayed as a single figure. For example, when the zoom-out operation is performed, receiving MIX 0 to 10 are grouped as first figure N11. The plurality of second figures N2 connecting receiving MIX 0 to 10 and foreign matter removal 1-MIX 0 to 9 are also grouped as second figure N12. Grouping is similarly performed for each of the subsequent processes. If the process branches, as after foreign matter removal 3, generator 240 performs grouping for each branch. The size of first figure N11 is determined by determiner 230 according to, for example, the number of materials (e.g., the number of flexible containers, the weight of flexible containers (such as the weight of resin)).

Thus, when display screen 400 is zoomed out after the display information is output, two or more first figures N1 corresponding to the same process among the plurality of first figures N1 may be displayed as one figure (first figure N11).

FIG. 7B illustrates the display when first figure N11 corresponding to receiving MIX is selected during the display illustrated in FIG. 7A. As illustrated in FIG. 7B, the process information of the process corresponding to selected first figure N11 (in this example, receiving MIX 0 to 10, which is information for each flexible container) may be displayed. This allows the user to easily understand that selected first figure N11 includes a plurality of receiving MIX processes. If any of the process information, i.e., receiving MIX 0 to 10, is selected, the corresponding NFT may be displayed.

When a zoom-in operation is obtained from information browsing user terminal 120 during the display in any of FIGS. 7A and 7B, the display may transition to the display in FIG. 5A, or may transition to the display in FIG. 5A via "HOME" icon 411 or the like.

FIG. 7C is a diagram illustrating display screen 440 as another example of the display screen of display information according to this embodiment. In FIG. 7C, an example is illustrated in which sorting 1-PP 2 (i.e., the sorting process for PP) is selected by a user of information browsing user terminal 120. Although FIG. 7C illustrates an example in which, as the material information of the material corresponding to selected sorting 1-PP 2, the NFT of the material is simultaneously displayed alongside the trace visualization screen, the present disclosure is not limited to such. The NFT may include information about the weight per flexible container NFT, CFP information, etc.

As illustrated in FIG. 7C, when one first figure N1 is selected, the display mode of other first figures N1 connected to (i.e., related to) selected first figure N1 may be changed. Identifier information (which may be an NFT-ID) uniquely identifying the preceding or subsequent process contained in the NFT corresponding to selected first figure N1 may be used to identify other first figures N1 corresponding to the preceding or subsequent process, and the display mode of other first figures N1 may be changed. Moreover, identifier information (which may be an NFT-ID) uniquely identifying the preceding process contained in the NFT corresponding to first figure N1 of the preceding process with the display mode changed may be used to identify other first figures N1 corresponding to the preceding process, and the display mode of other first figures N1 may be changed. Similarly, identifier information (which may be an NFT-ID) uniquely identifying the subsequent process contained in the NFT corresponding to first figure N1 of the subsequent process with the display mode changed may be used to identify other first figures N1 corresponding to the subsequent process, and the display mode of other first figures N1 may be changed.

In the example in FIG. 7C, first figures N1a with diagonal hatching represent first figures N1 whose display mode has been changed, and first figures N1b without diagonal hatching represent first figures N1 whose display mode has not been changed. The display mode may be generated, for example, by generator 240.

This allows the user of information browsing user terminal 120 to intuitively know which material is used to manufacture the material corresponding to selected first figure N1, and which produced object is manufactured using the material corresponding to selected first figure N1.

Thus, when information processing device 200 receives a selection of one of the plurality of first figures N1 included in the display information after the display information is output to information browsing user terminal 120, information processing device 200 changes the display mode of one or more other first figures N1 corresponding to one or more other objects related in product manufacturing to the object corresponding to selected first figure N1. Information processing device 200 displays one or more other first figures N1 in a different mode from the rest of first figures N1 (i.e., first figures N1 corresponding to objects not related in product manufacturing to the object corresponding to selected first figure N1).

Furthermore, the user interface (UI) (i.e., the display mode) may be changed based on the user's selection history from past display of display screen 400. Changing the display mode here includes changing the position of first figure N1. For example, how many times the user clicked each first figure N1 (node) in the past may be recorded, and the display mode of first figure N1 may be changed using the use frequency (e.g., the number of clicks). More frequently used first figure N1 may be displayed with greater emphasis. Emphasizing frequently used first figure N1 (e.g., first figure N1 with a use frequency greater than or equal to a predetermined frequency) involves, for example, moving first figure N1 to an easily recognizable position such as the center of the screen or within a predetermined distance from the start button, or changing its color, size, etc.

First figure N1 may be indicated by an NFT mark. This makes it easy to obtain related NFTs. For example, an NFT-ID may be written in the detailed information. Information indicating to which NFT (to which first figure N1) it is related may be written in the detailed information, for example. A figure showing their relationship (input and output of each process) may also be displayed.

### [Embodiment 2]

An information processing method, etc. according to this embodiment will be described below with reference to FIGS. 8A and 8B. In the following Embodiments 2 to 5, the differences from Embodiment 1 will be mainly described, and the description of parts that are the same as or similar to those in Embodiment 1 will be omitted or simplified. The configuration of the information processing device according to each of Embodiments 2 to 5 may be the same as that of information processing device 200 according to Embodiment 1. In Embodiments 2 to 5, the reference signs used in information processing device 200 according to Embodiment 1 will be used for convenience.

FIG. 8A is a sequence diagram illustrating the operation (information processing method) of information processing system 1 according to Embodiment 2. In this embodiment, assuming that a plurality of competitors can view the information stored in storage system 300, an example of controlling the content of information disclosure (access control) will be described. This makes it possible to prevent information that is not to be shown to certain others from being viewed by them.

As illustrated in FIG. 8A, information providing user terminal 110 outputs access control information in addition to LCA information to information processing device 200 (S11). The access control information includes information for restricting the display of the trace visualization screen, and includes, for example, at least one of: information identifying the target of access control; information indicating which information or region is included in the display range subjected to access control; or information indicating the method of access control, such as hiding or degrading image quality.

Next, information processing device 200 outputs the LCA information and the access control information to storage system 300 (S21). For example, information processing device 200 generates transaction data including a request to register the LCA information and the access control information as NFTs, and outputs the transaction data to ledger server 300a in storage system 300. As a result, the LCA information and the access control information are stored in storage system 300.

Next, upon receiving an information obtainment request (S40), storage system 300 outputs the LCA information and access control information corresponding to the information obtainment request to information processing device 200, and thus information processing device 200 obtains the LCA information and access control information in response to the information obtainment request (S51).

Next, generator 240 generates display information based on the obtained LCA information and access control information (S61). Step S61 will be described with reference to FIG. 8B.

FIG. 8B is a flowchart illustrating the operation (information processing method) of information processing device 200 according to this embodiment. Steps S220, S250, and S231 in FIG. 8B correspond to Step S61 in FIG. 8A.

As illustrated in FIG. 8B, communicator 210 in information processing device 200 obtains LCA information and access control information from storage system 300 in response to an information obtainment request from information browsing user terminal 120 (S211). Step S211 corresponds to Step S51 in FIG. 8A. The timing at which communicator 210 obtains the LCA information and access control information is not particularly limited, and communicator 210 may obtain these information simultaneously or at different times. Access control information may be associated with LCA information or with a company.

Next, determiner 230 determines the display mode based on the LCA information (S220), and determines the display range subjected to access control based on the access control information (S250). In Step S250, determiner 230 determines whether to perform access control. If determiner 230 determines to perform access control, determiner 230 determines the display range subjected to access control (i.e., the details of access control) based on the access control information. Determining whether to perform access control corresponds to determining whether to implement display restrictions on the trace visualization screen.

The determination of whether to perform access control may be based on the access control information, or based on whether the transmission source of the information obtainment request is a company included in the supply chain of the product. For example, in the case where the access control information includes performing access control on the company that has transmitted the information obtainment request, determiner 230 determines to perform access control if the transmission source of the information obtainment request is a company included in the supply chain of the product. Determiner 230 may also determine to perform access control if the transmission source of the information obtainment request is a company not included in the supply chain of the product.

The determination of the display range subjected to access control may be made by determining which region of display screen 400 in FIG. 5A is to be hidden. The determination of the display range subjected to access control includes at least one of: hiding information (e.g., process name) identifying at least one process among the one or more processes; hiding each first figure N1 corresponding to at least one process among the one or more processes; or degrading the image quality of at least part of the visualization screen. The information necessary for this determination is included in the access control information.

Moreover, the determination of the display range subjected to access control corresponds to determining the degree of access control. Examples of degrees include showing the entire image (i.e., all processes), showing only the first and last processes, and showing first figures N1 but hiding process names. Since it is known whether the company that has transmitted the information obtainment request is included in the supply chain, the access control information output in Step S11 includes information indicating how much information can be disclosed to companies included in the supply chain and companies not included in the supply chain, and this information is registered in storage system 300. Access control is performed on information stored by the corresponding company.

Next, generator 240 generates display information reflecting the display mode determined in Step S220 and the display range determined in Step S250 (S231). The generated display information includes information for displaying an image corresponding to the details of access control, that is, an image with display restrictions according to the access control information.

### [Embodiment 3]

An information processing method, etc. according to this embodiment will be described below with reference to FIGS. 9A and 9B.

FIG. 9A is a sequence diagram illustrating the operation (information processing method) of information processing system 1 according to this embodiment. In this embodiment, assuming that storage system 300 has a distributed ledger managed at least using blockchain technology, an example will be described in which the display mode is changed according to blockchain information related to the blockchain. In this embodiment, at least part (e.g., all) of LCA information is included in an NFT and managed on the blockchain.

As illustrated in FIG. 9A, information processing device 200 outputs an information obtainment request to storage system 300 (S40), and then obtains LCA information (here, NFT) and blockchain information corresponding to the information obtainment request (S52). The blockchain information is information related to one or more blockchains, and includes, for example, information related to the blockchain in which the NFT is managed. The blockchain information includes, for example, the contract address of the blockchain. The blockchain information may also include other information specific to the blockchain. The blockchain information may also be included in the NFT.

Next, generator 240 generates display information based on the obtained LCA information (NFT) and blockchain information (S62). Generator 240 switches the display mode of the image based on the obtained blockchain information. Step S62 will be described with reference to FIG. 9B.

FIG. 9B is a flowchart illustrating the operation (information processing method) of information processing device 200 according to this embodiment. Steps S222 and S230 in FIG. 9B correspond to Step S62 in FIG. 9A.

As illustrated in FIG. 9B, communicator 210 in information processing device 200 obtains LCA information (here, NFT) and blockchain address information from storage system 300 in response to an information obtainment request from information browsing user terminal 120 (S212). Step S212 corresponds to Step S52 in FIG. 9A. The timing at which communicator 210 obtains the NFT and blockchain information is not particularly limited, and communicator 210 may obtain these information simultaneously or at different times.

Next, determiner 230 determines the display mode based on at least one of the NFT or the blockchain address information (S222). For example, determiner 230 may change at least one of the size, color, or shape of first figure N1 or change at least one of the thickness, direction, length, color, or shape of second figure N2, based on the blockchain address information. Determiner 230 may, for example, make the display mode of first figures N1 corresponding to NFTs stored in the same blockchain different from the display mode of first figures N1 corresponding to NFTs stored in other blockchains. Determiner 230 may also change the display mode of the NFT illustrated in FIG. 5B based on the blockchain information. Determiner 230 may change at least one from among: the color of text or background on NFT display screen 410; and icon 411 on NFT display screen 410. Changing icon 411 may involve, for example, changing the shape of the frame to another polygon, a circle, an ellipse, etc., or changing the presence or absence or color of the filled portion. The icon is not limited to an NFT icon, and may be an icon indicating the type of information displayed.

Thus, the UI display may be switched according to the information contained in the blockchain information.

### [Embodiment 4]

An information processing method, etc. according to this embodiment will be described below with reference to FIGS. 10 to 12. In this embodiment, an information processing method that makes the material corresponding to selected first figure N1 available for purchase will be described.

FIG. 10 is a sequence diagram illustrating the operation (information processing method) of information processing system 1 according to this embodiment. The LCA information output in Step S10 may include, for example, information indicating whether the material is currently tradable. The information obtainment request may include information indicating a desire to trade the material, or information indicating no desire to trade the material.

As illustrated in FIG. 10, information processing device 200 generates display information based on the obtained LCA information (S63). The generated display information includes an icon indicating that the material corresponding to selected first figure N1 is available for purchase.

FIG. 11 is a diagram illustrating an example of NFT display screen 450 according to this embodiment.

As illustrated in FIG. 11, NFT display screen 450 displays, for example, a "Go to trading screen" button (icon 413) for trading (e.g., purchasing) the material. The "Go to trading screen" button is an example of information for purchasing the object corresponding to selected first figure N1.

Referring again to FIG. 10, after information browsing user terminal 120 displays the display information (S80), if the "Go to trading screen" button on the display information (in this example, display screen 450) is pressed (S90), generator 240 in information processing device 200 generates trading screen information for trading the material and outputs the trading screen information to information browsing user terminal 120 (S100).

Here, whether the material is currently tradable may be determined based on the LCA information, and Step S100 may be performed if it is determined that the material is currently tradable.

Upon receiving the trading screen information, information browsing user terminal 120 displays the trading screen information (S110). That is, the display screen of display 121 transitions from the display information to the trading screen information.

This allows a user operating information browsing user terminal 120 to easily purchase the material (object) corresponding to first figure N1 displayed on the trace visualization screen.

FIG. 12 is a flowchart illustrating the operation (information processing method) of information processing device 200 according to this embodiment. Steps S220, S260, and S233 in FIG. 12 correspond to Step S63 in FIG. 10.

As illustrated in FIG. 12, determiner 230 determines whether each material (i.e., each first figure N1) is tradable based on LCA information (S260). For example, determiner 230 performs the determination in Step S260 for each material using information indicating tradability obtained in advance from a company that sells the material. If there is at least one tradable material (Yes in S260), the process proceeds to Step S233. If there is no tradable material (No in S260), the process proceeds to Step S230 in FIG. 6.

Next, generator 240 generates display information (S233). The generated display information includes, for example, a "Go to trading screen" button on the NFT display screen for tradable materials. In other words, display information including the "Go to trading screen" button is generated. The "Go to trading screen" button is not added to the NFT display screen for untradable materials. For example, a display indicating "Untradable" may be added to the NFT display screen for untradable materials. The user can thus be notified that the material is untradable.

After the display information is output, determiner 230 determines whether the "Go to trading screen" button has been pressed (S270).

Next, if determiner 230 determines that the "Go to trading screen" button has been pressed (Yes in S270), generator 240 outputs the trading screen information to information browsing user terminal 120 (S280). If determiner 230 determines that the "Go to trading screen" button has not been pressed (No in S270), the process ends.

In the trace visualization screen illustrated in FIG. 5A, etc., the display mode of first figures N1 corresponding to tradable materials may be made different from the display mode of first figures N1 corresponding to untradable materials. The user can thus be notified of the purchase availability of each material on the trace visualization screen.

Furthermore, whether a material has been used up or is no longer available may be determined. This determination may be performed in a digital twin. If the material is no longer available, the "Go to trading screen" button may be disabled. In trading, ownership of materials may be transferred upon movement in logistics.

### [Embodiment 5]

An information processing method, etc. according to this embodiment will be described below with reference to FIGS. 13 to 15. In this embodiment, an information processing method, etc. capable of displaying statistical values regarding materials corresponding to first figures N1 within a region selected by the user of information browsing user terminal 120 on the trace visualization screen will be described. Information processing device 200 in this embodiment includes calculator 250.

FIG. 13 is a sequence diagram illustrating the operation (information processing method) of information processing system 1 according to this embodiment. Although an example in which rectangular region R is selected by the user is illustrated in FIG. 13, the region is not limited to a rectangle. For example, the region may be a circle, a polygon other than a rectangle, or a freehand-drawn region.

As illustrated in FIG. 13, after display information is displayed on information browsing user terminal 120, information processing device 200 obtains a rectangle selection (S120).

FIG. 14 is a diagram illustrating a selection of rectangular region R according to this embodiment. Rectangular region R represents information indicating first figures N1 for which a statistical value is to be calculated.

As illustrated in FIG. 14, rectangular region R may be a region including all first figures N1 of one process (receiving process in the example in FIG. 14), but is not limited to this. Rectangular region R is any region including two or more first figures N1, and may be a region including only part of first figures N1 of one process.

First figures N1 for which a statistical value is to be calculated may also be individually selected by the user.

Referring again to FIG. 13, when calculator 250 receives a selection of two or more first figures N1 (rectangular region R in this example) among the plurality of first figures N1 included in the display information, calculator 250 calculates the statistical value of the objects corresponding to selected two or more first figures N1 (S130). For example, calculator 250 calculates the statistical value of the numerical value (e.g., weight, greenhouse gas emissions) included in the NFT of each of selected two or more first figures N1. The statistical value is the sum or average, but may also be the maximum, minimum, median, mode, etc. Calculator 250 may calculate the statistical value for each item included in the NFTs. Which item is subjected to statistical value calculation may be selected by the user. The statistical value is an example of statistical information. The statistical information may be a determination result indicating whether the statistical value meets a predetermined value (e.g., a user-specified value).

Next, communicator 210 outputs the statistical value calculated by calculator 250 to information browsing user terminal 120 (S140). Information browsing user terminal 120 is an example of the output destination of the display information.

Next, having obtained the statistical value, information browsing user terminal 120 displays the statistical value (S150). The statistical value may be superimposed on the display screen, or displayed on a dedicated screen.

FIG. 15 is a flowchart illustrating the operation (information processing method) of information processing device 200 according to this embodiment.

As illustrated in FIG. 15, after the display information is output (S240), communicator 210 in information processing device 200 obtains a rectangle selection (i.e., rectangular region R) selected in the display information from information browsing user terminal 120 (S290).

Nodes (first figures N1) for statistical calculation may be selected from among the plurality of nodes included in the rectangle selection from the viewpoint of circular economy. For example, nodes that are not connected by lines may be excluded, nodes corresponding to different materials (e.g., PP and ABS) may be excluded, and nodes belonging to different organizations may be excluded.

Next, calculator 250 calculates the statistical value based on the NFTs of the materials corresponding to first figures N1 within rectangular region R selected by rectangle selection (S300). Step S300 corresponds to Step S130 in FIG. 13.

Next, communicator 210 outputs the statistical value calculated by calculator 250 to information browsing user terminal 120 (S310). This makes it possible to display the statistical value on display 121 of information browsing user terminal 120, so that the user of information browsing user terminal 120 can be notified of the statistical value.

### (Various Data Structures and Smart Contract Execution)

The data structure of distributed ledgers, the execution of smart contracts, and the data structure of NFTs will be described with reference to FIGS. 16 to 20.

FIG. 16 is an explanatory diagram illustrating the data structure of a blockchain, which is an example of a distributed ledger.

A blockchain is a chain of blocks, which are its units of recording. Each block includes a plurality of items of transaction data and the hash value of the immediately preceding block.

FIG. 16 illustrates blocks B1, B2, and B3 included in the blockchain.

For example, block B2 includes the hash value of preceding block B1. The hash value of block B1 is calculated using a hash algorithm on block B1.

Block B3 includes, as the hash value of block B2, a hash value calculated from the plurality of items of transaction data included in block B2 and the hash value of block B1.

Thus, since the blockchain has a structure in which blocks including the contents of the preceding block as a hash value are connected in a chain, tampering with the recorded transaction data can be effectively prevented.

If past transaction data is altered (i.e., tampered with), the hash value of the block containing this transaction data will differ from the value before the alteration. In this case, in order to make the block containing the altered transaction data appear correct, all blocks from this block onward in the distributed ledger, which is stored by a plurality of servers, needs to be rebuilt, which is practically extremely difficult. This feature makes tampering with transaction data included in the blockchain virtually impossible.

When a node terminal (node) stores transaction data in the blockchain, the node generates a block containing the transaction data to be stored and then attempts to reach consensus by performing processing based on a consensus algorithm with other nodes regarding the generated block. The node then performs control to store the block in the blockchain if consensus is reached. This enables a plurality of nodes operating autonomously and in a distributed manner to connect valid blocks to the blockchain. Examples of consensus algorithms include Practical Byzantine Fault Tolerance (PBFT), Proof of Work (PoW), and Proof of Stake (PoS). When using Hyperledger Fabric as an example of distributed ledger technology, the consensus algorithm does not need to be executed.

FIG. 17 is an explanatory diagram illustrating the data structure of transaction data.

The transaction data illustrated in FIG. 17 includes transaction body BP1 and digital signature BP2 (also simply called a signature). Transaction body BP1 is the data itself contained in the transaction data. Digital signature BP2 is generated by encrypting the hash value of transaction body BP1 with the signature key (i.e., private key) of the creator of the transaction data.

A node that receives the transaction data can verify the validity of transaction body BP1 (i.e., transaction body BP1 has not been tampered with) using digital signature BP2 included in the transaction data. This makes tampering with the data contained in transaction body BP1 practically impossible. By storing the verified transaction data in the blockchain, the validity of the transaction data in the blockchain can be maintained.

As described above, transaction data in a blockchain is stored sequentially using both the hash value of the transaction data and the hash value of the block. This ensures that transaction data in the blockchain is stored and maintained substantially without tampering, which is a distinct advantage over databases or distributed databases that merely store collections of data.

FIG. 18 is an explanatory diagram illustrating transaction data related to the execution of smart contracts. FIG. 19 is an explanatory diagram illustrating processing related to the execution of smart contracts.

A series of processes related to the execution of a smart contract using a distributed ledger will be described with reference to FIGS. 18 and 19.

In Step SB1, a node stores transaction data B11 including contract code B12 describing the processing of the smart contract, in distributed ledger B10. For example, the node obtains transaction data B11 by receiving transaction data B11 from an information processing device via communication or by generating transaction data B11, and stores obtained transaction data B11 in distributed ledger B10. Step SB1 is performed before the smart contract is executed.

In Step SB2, the node stores transaction data B15 including instruction B16 to execute the smart contract, in distributed ledger B10. For example, the node receives transaction data B15 from an information processing device via communication and stores received transaction data B15 in distributed ledger B10.

In Step SB3, in response to the storage of transaction data B15 including instruction B16 in distributed ledger B10 in Step SB2, the node reads contract code B12 from distributed ledger B10 and executes processing based on contract code B12. The results of this processing may be included in transaction data and stored in distributed ledger B10.

Through this series of processes, when the distributed ledger system receives transaction data B15 including instruction B16 to execute the smart contract, the distributed ledger system automatically executes processing according to instruction B16 (i.e., without human intervention). Hence, high-efficiency (fast or short-duration) processing can be carried out. High-efficiency processing reduces power consumption. Furthermore, because human intervention is not involved, human error, fraud, or tampering with information can be prevented. Since the results of such processing are stored in the blockchain, tampering with the processing results is practically impossible.

FIG. 20 is an explanatory diagram illustrating the structure of an NFT and metadata. An NFT is a token stored in a distributed ledger and is a unique token (i.e., non-fungible token). While NFTs are standardized, for example, as Ethereum Request for Comments (ERC) 721, they are not limited to such and may conform to other standards or be non-standard (for example, unique to an organization). While ERC 721 is a standard for unique tokens, the NFTs described herein need not necessarily be unique.

FIG. 20 illustrates transaction data B21 stored in the distributed ledger. Transaction data B21 includes an NFT. The NFT includes a token ID (i.e., identification information uniquely identifying the NFT) and a Uniform Resource Identifier (URI) for metadata.

The NFT includes metadata. The metadata can be placed at a location accessible via a network (e.g., storage device B22). The metadata URI indicating the location of the metadata may be calculated using the token ID of the NFT and a predetermined base URI.

Information managed as an NFT may be included in transaction data B21 or in the metadata. By including the information managed as an NFT in the metadata, the amount of information included in transaction data B21 (i.e., the amount of information included in the blockchain) can be reduced. In this case, the metadata can be regarded as containing the actual information managed as an NFT. When an image is managed as an NFT, the URL indicating the image data of the image may be managed as an NFT.

Each of the structural elements in the above embodiments may be configured in the form of an exclusive hardware product, or may be realized by executing a software program suitable for the structural element. Each of the structural elements may be realized by means of a program executing unit, such as a CPU and a processor, reading and executing the software program recorded on a recording medium such as a hard disk or a semiconductor memory.

### (Other Embodiments)

While the information processing method, etc. according to one or more aspects have been described above by way of Embodiments 1 to 5, the present disclosure is not limited to such embodiments. Other modifications obtained by applying various changes conceivable by a person skilled in the art to the embodiments and any combinations of the structural elements in different embodiments without departing from the scope of the present disclosure are also included in the present disclosure.

For example, while blockchain is used in each of the above embodiments, it is not necessary to use blockchain. For example, distributed ledger technologies other than blockchain, such as hash graphs, may be used.

Although the above embodiments describe an example in which first figure N1 is a two-dimensional figure and second figure N2 is a one-dimensional figure, the present disclosure is not limited to such. First figure N1 may be a one-dimensional figure or a figure with three or more dimensions, and second figure N2 may be a figure with two or more dimensions.

Although the above embodiments describe an example in which resin products such as white PP 500 are products, the present disclosure is not limited to such. Other examples of products include home appliances, and mobile objects such as vehicles and drones.

In each of the above embodiments, the nodes (first figures) may be provided on a one-to-one basis for goods or resources. One node may be provided per model, per bag (e.g., flexible container), per temporal unit, per spatial unit, per organization, per building such as factory, per process, per type, or per combination thereof. The size of the first figure corresponds to the weight of the flexible container, and may be dynamically changed if it is a relative value, or changed in accordance with CO₂ emissions, unit price (yen), volume, etc. The shape and color of the first figure may be changed in accordance with the type of resource (plastic (e.g., PP, ABS, etc.) or iron), organization (e.g., ∘ for factory A, △ for factory B, etc.), value precision (e.g., the number of decimal places, access control), value reliability (e.g., lighter color for temporary numbers, date and time of data obtainment, number of people checking the data, whether the data is entered automatically or manually), whether the product currently exists, time (e.g., elapsed time since data obtainment), whether it is a prediction (simulation) node that does not yet exist, material purity or performance (e.g., changing the shade depending on the purity or performance even for the same material (to distinguish between horizontal recycling and cascade recycling), etc.), material state (raw material, single material, composite material, part, product, waste, etc.), CO₂ emissions or cost (e.g., darkening areas with high CO₂ emissions or cost burdens in process heatmap analysis, etc.), and the like. The shape of the first figure may also be changed depending on whether it represents a thing, a process, or energy.

In each of the above embodiments, the second figure may be an arrow, and the thickness of the arrow may be changed based on at least one of the weight ratio, volume ratio, or value (unit price) included in the NFT. In this case, the NFT of the object corresponding to either of the two first figures connected by the second figure may be used. The direction of the arrow may be changed based on at least one of the dimensions (e.g., graph version), temporal direction, or direction when tracing. In this case, either of the two first figures connected by the second figure may be the reference. Moreover, at least one of the length or color of the arrow may be changed based on time (e.g., the time taken for the process). Further, the shape of the arrow (straight line, arc, etc.) may be changed based on display purposes such as displaying resource circulation traces.

In each of the above embodiments, there may be a frame for each lifecycle stage, and nodes (e.g., first figures) may be arranged corresponding to their stages. Examples of lifecycle stages include raw material procurement, production, distribution, use, and disposal/recycling. Thus, display information as illustrated in FIG. 5A may be generated for each stage: raw material procurement, production, distribution, use, and disposal/recycling.

In each of the above embodiments, there may be two possible methods for changing the display mode: a static method and a dynamic method. Examples of static methods include maintaining the form (display mode) as initially registered, and the user manually registering new information. Examples of dynamic methods include changing the display mode in accordance with fluctuations in relative values registered across the system (for example, the color changes according to the relative values when the user sets the ends of a color scale), and shifting the drawing position or color tone when graphs are overlaid (like in GIS).

In each of the above embodiments, when the number of nodes (first figures) to be drawn increases, two or more first figures may be grouped by process, organization, region, material, time, or geographic information (e.g., in a grid-based heatmap). For example, nodes may be grouped by rectangle selection, by the relationship with the zoom button (for example, automatically grouping when zoomed out), or by ensuring that the maximum number of displayed nodes is not exceeded. Furthermore, processes involving material mixing that could lead to a decrease in quality may be highlighted. For example, if copper mixing with recycled iron reduces its strength, the first figures of the process where this mixing is likely to occur may be highlighted. Examples of operations include selecting a plurality of materials and highlighting areas where traces overlap.

In Embodiment 2, access control may be performed based on user information of the supply chain (for example, identification information such as a user ID). Whether a company is a competitor or a collaborating company may be determined based on user information, and display may be restricted for competitors. The determination method may be manual input by the user, or whether a company is a competitor may be automatically determined depending on whether trading has been performed based on trading information obtainable from the registration information, or whether the companies are responsible for the same part of the supply chain obtainable from the registration information. Depending on the access control level, certain information may be hidden or blurred. Input and output may be shown, but certain areas, such as the center, may be blurred. For example, the display region of information that is not to be shown to a competitor company (parts of the process that the company wants to keep secret) may be blurred. Furthermore, collaborating companies may be shown information separated by process (the positions of PP and ABS are separated), while competitors may be shown randomized information (the position of the first figure is randomly moved). In other words, processed information may be displayed to competitors. Moreover, only the first figures corresponding to a predetermined process, such as the first and/or last process, of the entire process (for one factory) may be displayed to competing companies. Only the traces of the types of resources provided may be displayed to competing companies. As an example, if PP is sold, only the PP can be traced, and the ABS portion is not displayed.

In Embodiment 3, icons may be changed based on blockchain information. The blockchain information may include, for example, information indicating at least one of the following: whether the inter-BC linkage function is enabled, the network identifier, whether it is signed, whether it is synchronized, and whether it is verified. The logo of the data being handled (for example, the logo of the token type) may be changed if the contract address is different or stored on a different blockchain. The logo of the data being handled may be changed to gradually darken as the probability of Proof of Work (PoW) increases. The logo of the data being handled may be changed to indicate whether it is connected to an active blockchain. The display mode may be changed depending on whether it includes a newly generated block and transaction data, the current information of the node (first figure) (whether the mining speed is healthy), etc. NFT trading may be made visible. For example, the representation of the node may be changed depending on whether resources or goods can be purchased. For example, the representation of the node may be changed depending on whether it is the owner or creator of the NFT. Recycled materials and virgin materials may be guaranteed; for example, extraction of renewable energy ratio or 100% renewable energy assurance in manufacturing. For ores, due diligence guarantees may apply.

Although the above embodiments describe an example of manufacturing in which a foreign matter removal process and a sorting process are performed on a material called mixed plastics (here, waste) that has been received to produce products (here, raw materials) of each resin (e.g., polypropylene resin, polystyrene resin, and acrylonitrile butadiene styrene resin), manufacturing is not limited to such. For example, manufacturing may involve performing a foreign matter removal process, a mixing process, etc., on each resin material (here, raw material) to produce a product called mixed plastics. In this case, the target object of the first process is each resin, and the produced object of the last process is mixed plastics. The materials and products in the present disclosure are not limited to the above examples, and any other materials and any combination of other products may be used as long as the product is produced from the materials via one or more processes.

Each device in the above embodiments is specifically a computer system including a microprocessor, a read only memory (ROM), a random access memory (RAM), a hard disk unit, a display unit, a keyboard, a mouse, and the like. A computer program is recorded in the RAM or the hard disk unit. Each device achieves its functions by the microprocessor operating according to the computer program. The computer program is configured by combining multiple command codes indicating instructions to the computer, to achieve predetermined functions.

Part or all of the structural elements constituting each device in the foregoing embodiments may be configured as a single large scale integration (LSI). A system LSI is a super-multifunctional LSI manufactured by integrating multiple components on a single chip, and specifically is a computer system including a microprocessor, ROM, RAM, and so forth. A computer program is recorded in the RAM. The system LSI achieves its functions by the microprocessor operating according to the computer program. While description has been made regarding a system LSI, there are different names such as IC, LSI, super LSI, and ultra LSI, depending on the degree of integration. The circuit integration technique is not limited to LSIs, and dedicated circuits or general-purpose processors may be used to achieve the same.

The present disclosure may be the above-described methods, or may be a computer program which realizes these methods by a computer, or may be digital signals made up of the computer program. One aspect of the disclosure may be a computer program that causes a computer to execute the characteristic steps included in the information processing methods illustrated in FIGS. 4, 6, 8A to 10, 12, 13, 15, and 20.

The present disclosure may be the computer program or the digital signals recorded on a computer-readable recording medium, such as flexible disk, hard disk, CD-ROM, MO, DVD, DVD-ROM, DVD-RAM, Blu-ray (registered trademark) disc (BD), or semiconductor memory. The present disclosure may also be the digital signals recorded on these recording mediums.

The present disclosure may be an arrangement where the computer program or the digital signals are transmitted over an electric communication line, a wireless or wired communication line, a network such as the Internet, data broadcasting, or the like.

The order in which the steps are performed in each flowchart and sequence diagram is an example provided for specifically describing the present disclosure, and order other than the above may be used. Part of the steps may be performed simultaneously (in parallel) with one or more other steps, and part of the steps may be omitted.

The division of the functional blocks in each block diagram is an example, and a plurality of functional blocks may be implemented as one functional block, one functional block may be divided into a plurality of functional blocks, or part of functions may be transferred to another functional block. Moreover, functions of a plurality of functional blocks having similar functions may be implemented by single hardware or software in parallel or in a time-sharing manner.

Information processing device 200 according to the above embodiments may be implemented as a single device or a plurality of devices. In the case where information processing device 200 is implemented by a plurality of devices, the structural elements in information processing device 200 may be assigned to the plurality of devices in any way. In the case where information processing device 200 is implemented by a plurality of devices, the communication method between the plurality of devices is not limited, and may be wireless communication or wired communication. The communication method may be a combination of wireless communication and wired communication.

### [Industrial Applicability]

The present disclosure is useful for, for example, an information processing device that outputs information related to product manufacturing.

### [Reference Signs List]

- 1: information processing system
- 110: information providing user terminal
- 120: information browsing user terminal
- 121: display
- 200: information processing device
- 210: communicator
- 220: controller
- 230: determiner
- 240: generator
- 250: calculator
- 300: storage system
- 300a, 300b, 300c: ledger server
- 301a, 301b, 301c, B22: storage device
- 400, 410, 420, 430, 440, 450: display screen
- 411, 412, 413: icon
- 500: white PP (product)
- 510: black PP (product)
- 520: white PS (product)
- 530: black PS (product)
- 540: black ABS (product)
- 550: white ABS (product)
- B1, B2, B3: block
- B10: distributed ledger
- B11, B15, B21: transaction data
- B12: contract code
- B16: instruction
- BP1: transaction main body
- BP2: digital signature
- N1, N1a, N1b, N11: first figure
- N2, N12: second figure
- R: rectangular region

## Claims

1. An information processing method comprising:
obtaining a request to provide display information including a history of one or more processes executed when manufacturing a product;
obtaining history information of each of the one or more processes for the product in response to the request;
generating the display information based on the history information obtained for each of the one or more processes; and
outputting the display information generated,
wherein the one or more processes include a process of manufacturing a second object from a first object for manufacturing the product, and
the display information includes information for displaying an image that includes: a plurality of first figures corresponding one-to-one to objects in the one or more processes; and a second figure corresponding to a flow of the objects for manufacturing the second object from the first object via the one or more processes.

2. The information processing method according to claim 1,
wherein the history information includes at least one item of information from among a weight of an object among the objects, greenhouse gas emissions in a corresponding process among the one or more processes, a unit price of the object, and a size of the object, and
a display mode of either a first figure among the plurality of first figures or the second figure or both the first figure and the second figure is changed based on the at least one item of information.

3. The information processing method according to claim 2,
wherein the first figure is a two-dimensional figure, and at least one of a size, a color, or a shape of the first figure is changed based on the at least one item of information.

4. The information processing method according to claim 2,
wherein the second figure is a one-dimensional figure, and at least one of a thickness, a direction, a length, a color, or a shape of the second figure is changed based on the at least one item of information.

5. The information processing method according to any one of claim 1 to claim 4, comprising:
obtaining access control information for controlling access to the history information of the product,
wherein the display information includes information for displaying an image including a display restriction that is in accordance with the access control information.

6. The information processing method according to claim 5,
wherein the access control information includes at least one of: hiding information identifying at least one process among the one or more processes; hiding, among the plurality of first figures, each first figure corresponding to at least one process among the one or more processes; or degrading image quality of at least part of a region.

7. The information processing method according to claim 5,
wherein whether to implement the display restriction is determined depending on whether a transmission source of the request is a company included in a supply chain of the product.

8. The information processing method according to any one of claim 1 to claim 4,
wherein the history information includes non-fungible tokens (NFTs) associated one-to-one with the objects, and
the plurality of first figures are provided in one-to-one correspondence with the NFTs.

9. The information processing method according to claim 8,
wherein the NFTs are issued for respective processing units of a material used in a corresponding process among the one or more processes.

10. The information processing method according to claim 8,
wherein the NFTs are issued for respective containers accommodating a material used in a corresponding process among the one or more processes.

11. The information processing method according to claim 8,
wherein the history information of each of the one or more processes is stored in one or more blockchains,
the information processing method further comprises:
obtaining blockchain information regarding the one or more blockchains in which the history information of each of the one or more processes is stored; and
switching a display mode of either a first figure among the plurality of first figures or the second figure or both the first figure and the second figure, based on the blockchain information obtained.

12. The information processing method according to claim 11,
wherein, when a selection of one first figure among the plurality of first figures is received, an NFT associated with an object corresponding to the one first figure is displayed, and
the switching of the display mode includes changing a display mode of at least one from among: a color of text or background on a display screen of the NFT; and an icon on the display screen.

13. The information processing method according to any one of claim 1 to claim 4,
wherein the display information includes information for purchasing at least one object corresponding to at least one first figure among the plurality of first figures.

14. The information processing method according to any one of claim 1 to claim 4, comprising:
when a selection of two or more first figures among the plurality of first figures included in the display information is received after the display information is output, calculating statistical information of respective objects corresponding to the two or more first figures selected; and
outputting the statistical information calculated to an output destination of the display information.

15. The information processing method according to any one of claim 1 to claim 4, comprising:
when a selection of one first figure among the plurality of first figures included in the display information is received after the display information is output, changing a display mode of one or more first figures, among the plurality of first figures, corresponding to one or more other objects related in the manufacturing of the product to an object corresponding to the one first figure selected.

16. The information processing method according to any one of claim 1 to claim 4,
wherein, when a display screen of the display information is zoomed out after the display information is output, two or more first figures corresponding to a same process among the plurality of first figures are displayed as one figure.

17. The information processing method according to any one of claim 1 to claim 4,
wherein the history information of the product includes information for life cycle assessment of the product.

18. An information processing device comprising:
a first obtainer that obtains a request to provide display information including a history of one or more processes executed when manufacturing a product;
a second obtainer that obtains history information of each of the one or more processes for the product in response to the request;
a generator that generates the display information based on the history information obtained for each of the one or more processes; and
an outputter that outputs the display information generated,
wherein the one or more processes include a process of manufacturing a second object from a first object for manufacturing the product, and
the display information includes information for displaying an image that includes: a plurality of first figures corresponding one-to-one to objects in the one or more processes; and a second figure corresponding to a flow of the objects for manufacturing the second object from the first object via the one or more processes.

19. A program for causing a computer to execute the information processing method according to any one of claim 1 to claim 4.
